# EUROPÄISCHE PATENTSCHRIFT

(11) **EP 4 159 775 B1**
(45) Veröffentlichungstag und Bekanntmachung des Hinweises auf die Patenterteilung: **13.09.2023**
(21) Anmeldenummer: 22193370.8
(22) Anmeldetag: 01.09.2022
(51) Int. Cl.: C08F 126/06, C08F 2/48, C08F 2/50, C08F 4/40, C08F 4/80, C08F 226/06, C08F 271/02, C08F 283/00, C09J 151/00, C09J 7/38, C09J 4/06, C09J 7/10

(54) **LICHTHÄRTENDER REAKTIVER KLEBSTOFFFILM**
PHOTO-SETTING REACTIVE ADHESIVE FILM
FILM ADHÉSIF RÉACTIF DURCISSANT À LA LUMIÈRE

(30) Priorität: 30.09.2021 DE 102021125429
(43) Veröffentlichungstag der Anmeldung: 05.04.2023
(73) Patentinhaber: TESA SE, 22848 Norderstedt (DE)
(72) Erfinder: SCHÜMANN, Uwe, 22848 Norderstedt (DE); HANNEMANN, Frank, 22848 Norderstedt (DE); DIETZE, Sebastian, 22848 Norderstedt (DE); CZESKI, Tanita, 22848 Norderstedt (DE); RELLMANN-SPRINK, André, 22848 Norderstedt (DE)
(74) Vertreter: tesa SE

(56) Entgegenhaltungen:
- EP-A1- 3 757 183
- DE-A1-102016 224 169
- US-A- 3 096 202

## Beschreibung

### Technisches Gebiet der Erfindung

Die vorliegende Erfindung betrifft einen lichthärtenden, reaktiven, haftklebrigen Klebstofffilm, dessen Härtung durch blaues LED-Licht oder UV-LED-Licht initiiert wird. Der Klebstofffilm umfasst (a) mindestens ein reaktives Monomer oder Reaktivharz, (b) einen Initiator, insbesondere Radikalinitiator, (c) einen Photoredox-Katalysator, (d) ein Polymerisat aus Monomeren, umfassend N-Vinylverbindungen und (e) ein filmbildendes Polymer. Außerdem wird ein Verfahren zur Herstellung des erfindungsgemäßen reaktiven Klebstofffilms, wie oben beschrieben zur Verfügung gestellt. Mit dem erfindungsgemäßen Klebstofffilm können strukturelle Verklebungsfestigkeiten erzielt werden. Der Klebstofffilm kann zur Verklebung von diversen Materialien, wie zum Beispiel Kunststoff, Metall, Glas und/ oder Keramik verwendet werden. Verklebungen mit diesem Klebstofffilm zeichnen sich durch eine hohe Verklebungsfestigkeit und eine hohe Feuchtwärmebeständigkeit aus.

### Allgemeiner Stand der Technik

Auf Basis von Acrylmonomeren sind vor allem 2-Komponentenklebesysteme seit Jahren bekannt und in der Fachliteratur eingehend beschrieben. In diesen radikalisch polymerisierenden Systemen wird ein aus zwei Komponenten bestehendes Klebstofffilm-System auf die zu verklebenden Teile aufgetragen, wobei üblicherweise zwei flüssige Komponenten zum Einsatz kommen. Beispielsweise bestehen die eine Komponente aus den zu polymerisierenden Monomeren und einem Aktivator und die andere Komponente aus einer radikalbildenden Substanz (auch Härter oder Initiator genannt) und den zu polymerisierenden Monomeren. Nach Durchmischen oder zumindest Kontaktieren der beiden Komponenten entsteht durch chemische Reaktion des Aktivators mit der radikalbildenden Substanz mindestens ein Radikal und die Polymerisationsreaktion der zu polymerisierenden Monomere beginnt. Die Radikalkettenpolymerisation des Monomers findet anschließend bis zu einem Kettenabbruch statt und die Klebemasse härtet somit aus, wodurch eine dauerhafte Verklebung der zu verklebenden Teile erreicht wird.

In Form von haftklebrigen Filmen (Klebebändern) sind 2-Komponentenklebesysteme auf Basis von Acrylmonomeren ebenfalls bekannt. Sie werden beispielsweise beschrieben in EP 300847 A1, EP 3010989 A1, EP 3063243 A1, WO 2018104053 A1 sowie in EP 3328951 A1. Ein wesentlicher Nachteil dieser Filme ist die Tatsache, dass es zwei Filme sind, die formschlüssig in Kontakt gebracht werden müssen, was insbesondere dann zu einem Problem werden kann, wenn die zu verklebenden Flächen sehr lang und schmal sind und somit auch die entsprechenden Klebstofffilme sehr lang und schmal sein müssen.

Einkomponentige Klebstofffilme auf Basis von Acrylmonomeren gehören ebenfalls zum allgemein bekannten Stand der Technik. Diese werden üblicherweise mit Licht, insbesondere UV-Licht gehärtet. Die Härtungsreaktion wird dabei mit Hilfe eines Photoinitiators gestartet, der nach der Absorption von (UV)-Licht in einer Photolysereaktion zerfällt und so reaktive Spezies bildet, die die radikalische Polymerisation auslösen. Nachteilig kann hier die Schnelligkeit der Aushärtereaktion sein, insbesondere, wenn nicht-transparente Substrate verklebt werden sollen. Sobald die Reaktion ausgelöst ist, bleibt in der Regel nicht mehr genügend Zeit zum Fügen der zu verklebenden Bauteile. Somit sind solche Klebstofffilme nur für die Verklebung von (UV)-transparenten Substraten geeignet, da die Bestrahlung dann nach dem Fügen der Bauteile durch die Bauteile hindurch erfolgen kann. Nachteilig an diesem Klebstofffilmtyp ist weiterhin, dass die Polymerisation nicht als Dunkelreaktion weiterläuft.

In DE 102019209513 A1 wird ein Klebstofffilm auf Basis von Acrylmonomeren beschrieben, der diese geschilderten Nachteile des Standes der Technik nicht zeigt. Als nachteilig hat sich hier eine für viele Anwendungen unzureichende Feuchtwärmebeständigkeit herausgestellt.

In EP 3390553 A1 wird ein Verfahren vorgeschlagen, in dem ein Klebeband aus zwei miteinander reagierenden Schichten A und B, die durch eine Barriereschicht voneinander getrennt sind, mit Hilfe eines Lasers zur Reaktion und somit Aushärtung gebracht wird, indem die Barriereschicht durch die Einwirkung des Laserlichts entfernt wird. Nachteilig ist hier das Erfordernis von Laserlicht.

EP 3126402 A1 offenbart ein Verfahren, in dem eine radikalische Polyreaktion durch PlasmaBehandlung eines Klebstofffilms, enthaltend eine hinsichtlich einer radikalischen Polyreaktion reaktive Substanz und zusätzlich eine katalytisch aktive Substanz, ausgelöst wird. Mit diesem Verfahren wird eine genügend langsame Aushärtegeschwindigkeit erreicht. Nachteilig ist, dass ein zur Erzielung guter Verklebungsfestigkeiten geeignetes Plasma-Gerät noch nicht breit am Markt verfügbar ist. Zudem sind die erzielbaren Klebfestigkeitsergebnisse von Parametern abhängig, die mancherorts schwierig zu beeinflussen sind, wie zum Beispiel der Luftfeuchtigkeit.

### Aufgabe der vorliegenden Erfindung

Der vorliegenden Erfindung liegt insofern die Aufgabe zu Grunde, einen verbesserten, lichthärtenden reaktiven, haftklebrigen Klebstofffilm zur Verfügung zu stellen, mit dem hohe (sogenannte strukturelle) Verklebungsfestigkeiten und hohe Feuchtwärmebeständigkeiten erzielt werden können. Die Härtung soll durch blaues LED-Licht oder UV-LED-Licht initiiert werden können. Der Klebstofffilm soll genügend langsam härten, so dass das Fügen der zu verklebenden Bauteile mit einem gewissen zeitlichen Abstand nach der Initiierung erfolgen kann, damit auch nicht-transparente Bauteile verklebt werden können. Der Klebstofffilm soll nach der Initiierung und dem Fügen der Bauteile auch im Dunkeln weiter aushärten.

### Lösung der Aufgabe

Gelöst wird diese Aufgabe durch einen lichthärtenden, reaktiven, haftklebrigen Klebstofffilm gemäß Hauptanspruch, umfassend (a) mindestens ein reaktives Monomer oder Reaktivharz, (b) einen Initiator, (c) einen Photoredox-Katalysator, (d) ein Polymerisat, erhalten durch radikalische Polymerisation von Kohlenstoff-Kohlenstoff-Doppelbindungen enthaltenden Monomeren, dadurch gekennzeichnet, dass diese Monomere N-Vinyl-Verbindungen umfassen, und (e) ein filmbildendes Polymer.

### Detaillierte Beschreibung der Erfindung:

Die vorliegende Erfindung betrifft einen lichthärtenden, reaktiven, haftklebrigen Klebstofffilm gemäß Hauptanspruch, umfassend (a) mindestens ein reaktives Monomer oder Reaktivharz, (b) einen Initiator, (c) einen Photoredox-Katalysator, (d) ein Polymerisat, erhalten durch radikalische Polymerisation von Kohlenstoff-Kohlenstoff-Doppelbindungen enthaltenden Monomeren, dadurch gekennzeichnet, dass diese Monomere N-Vinyl-Verbindungen umfassen, und (e) ein filmbildendes Polymer. Bevorzugt ist der lichthärtende, reaktive, haftklebrige Klebstofffilm auf Basis von Acrylmonomeren. Die Härtung wird durch blaues LED-Licht oder UV-LED-Licht initiiert, und bevorzugt härtet der Klebstofffilm der vorliegenden Erfindung genügend langsam, so dass das Fügen der zu verklebenden Bauteile bei Bedarf, zum Beispiel falls nicht-transparente Substrate verklebt werden sollen, mit einem gewissen zeitlichen Abstand nach der Initiierung erfolgen kann und der nach der Verklebung auch im Dunkeln weiter aushärtet.

### Reaktives Monomer oder Reaktivharz

Wie hierin verwendet, soll das reaktive Monomer oder Reaktivharz für ein Monomer oder Harz stehen, das insbesondere zu einer Radikalkettenpolymerisation in der Lage ist.

Ein geeignetes, reaktives Monomer oder Reaktivharz ist ausgewählt aus mindestens einen Vertreter ausgewählt aus Acrylsäureester (wie z.B. 2-Ethylhexylacrylat), Methacrylsäureester, Vinylverbindungen und/oder oligomeren oder polymeren Verbindungen mit Kohlenstoff-Kohlenstoff-Doppelbindungen, sowie vernetzenden reaktiven Monomeren wie Diacrylaten, Dimethacrylaten, Triacrylaten, Trimethacrylaten, höher funktionellen Acrylaten, sowie höher funktionellen Methacrylaten. Als Reaktivharz(e) können oligomere Stoffe mit Acrylat- oder Methacrylatfunktion ausgewählt werden, wobei die Funktionalisierung einfach oder mehrfach sein kann. Sehr vorteilhaft werden diese im Gemisch mit zumindest einem reaktiven Monomer eingesetzt.

Bevorzugte Monomere im Hinblick auf eine hohe Verklebungsfestigkeit sind Acrylsäureester und/ oder Methacrylsäureester, in denen der Alkohol-Teil des Esters aromatische Strukturelemente, Heteroatome oder funktionelle Gruppen enthält. Bevorzugt sind Urethangruppen, Harnstoffgruppen, Sauerstoff- oder Stickstoff-Heterocyclen, Ethergruppen, Estergruppen, Säurefunktionen und/oder Hydroxylfunktionen. Im Hinblick auf eine gute Feuchtwärmebeständigkeit sind Acrylsäureester und/oder Methacrylsäureester, in denen der Alkohol-Teil des Esters ein Fettalkohol ist, ebenfalls bevorzugt. Weiterhin sind im Hinblick auf eine hohe Vernetzungsdichte vernetzende Monomere bevorzugt.

Beispiele für bevorzugte Monomere sind 2-Phenoxyethylacrylat (CAS-Nr.: 48145-04-6), 2-Phenoxyethylmethacrylat (CAS-Nr.: 10595-06-9), 2-Hydroxy-3-phenoxy-propylacrylat (CAS-Nr.: 16969-10-1), 2-Hydroxy-3-phenoxy-propylmethacrylat (CAS-Nr.: 16926-87-7), 2-[2-(Methacryloyloxy)ethoxycarbonyl]benzoesäure (CAS-Nr.: 27697-00-3), 2-[[(Phenylamino)-carbonyl]oxy]ethyl methacrylat (CAS-Nr.: 51727-47-0), 2-Tert-butyl-6-[(3-tert-butyl-2-hydroxy-5-methylphenyl)methyl]-4-methylphenylprop-2-enoat (CAS-Nr.: 61167-58-6), (5-Ethyl-1,3-dioxan-5-yl)methylacrylat (CAS-Nr. 66492-51-1), (2-Oxo-1,3-dioxolan-4-yl)methyl methacrylat (CAS-Nr.: 13818-44-5), Di(ethylenglycol)-2-ethylhexylether acrylat (CAS-Nr.: 117646-83-0), (2,2-Dimethyl-1,3-dioxolan-4-yl)methylprop-2-enoat (CAS-Nr.: 13188-82-4), Bernsteinsäure mono-[2-(acryloyloxy)-ethylester] (CAS-Nr.: 50940-49-3), Bernsteinsäure-mono-[2-(methacry-loyloxy)ethylester] (CAS-Nr.: 20882-04-6), (2,2-Pentamethylene-1,3-oxazolidyl-3)ethylmethacrylat (CAS-Nr.: 4203-89-8, 2-Hydroxy-3-(prop-2-enoyloxy)propyl-2-methyl-2-propyl-hexanoat (CAS-Nr.: 444649-70-1), 2-[[(Butylamino)carbonyl]oxy]ethyl acrylat (CAS-Nr.: 63225-53-6), Stearylacrylat (CAS-Nr.: 4813-57-4), Stearylmethacrylat (CAS-Nr.: 32360-05-7), sowie die vernetzenden reaktiven Monomere Diurethan dimethacrylat (Isomerenmischung) (CAS-Nr.: 72869-86-4), Bisphenol A glycerolate dimethacrylat (BIS-GMA, CAS-Nr.: 1565-94-2), Bisphenol A dimethacrylat (BIS-DMA, CAS-Nr.: 3253-39-2), Ethylenglykol-diacrylat (CAS-Nr.: 2274-11-5), Ethylenglykoldimethacrylat (CAS-Nr.: 97-90-5), Trimethyloylpropanpropoxylat-triacrylat (CAS-Nr.: 53879-54-2), Trimethyloylpropan-triacrylat (CAS-Nr.: 15625-89-5) und/oder Di(trimethylolpropan)tetraacrylat (CAS-Nr.: 94108-97-1). Besonders bevorzugt sind 2-Hydroxy-3-phenoxy-propylacrylat, 2-[[(Butylamino)carbonyl]oxy]ethyl acrylat und Diurethan dimethacrylat.

Der Anteil des reaktiven Monomers / der reaktiven Monomere beziehungsweise des Reaktivharzes / der Reaktivharze liegt bevorzugt im Bereich von etwa 10 bis 80 Gewichtsprozent (Gew.%), besonders bevorzugt etwa 20 bis 60 Gew.%, bezogen auf die Gesamtmischung der Bestandteile des erfindungsgemäßen reaktiven Klebstofffilms. Am stärksten bevorzugt werden etwa 30 bis 50 Gew.% des reaktiven Monomers / der reaktiven Monomere beziehungsweise des Reaktivharzes / der Reaktivharze, bezogen auf die Gesamtmischung der Bestandteile des reaktiven Klebstofffilms, eingesetzt. Die Gesamtmischung der Bestandteile des erfindungsgemäßen reaktiven Klebstofffilms steht hier für die gesamte Menge der eingesetzten (a) reaktiven Monomere/ Reaktivharze, (b) des Initiators, (c) des Photoredox-Katalysators, (d) des Polymerisats aus Monomeren, umfassend N-Vinylverbindungen, (e) des filmbildenden Polymers, sowie gegebenenfalls weiterer optional vorliegender Bestandteile, die als Summe in Gewichtsprozent (Gew.%) erhalten wird. Lösemittel beziehungsweise Wasser dienen nur der Herstellung und werden in dieser Betrachtung nicht zur Gesamtmischung der Bestandteile des erfindungsgemäßen reaktiven Klebstofffilms gezählt. Das gilt auch für Lösemittel, die gegebenenfalls in den kommerziell erhältlichen Rohstoffen bereits enthalten sind.

### Initiator, insbesondere Radikalinitiator

Wie hierin verwendet, steht der Begriff Initiator, insbesondere Radikalinitiator bzw. radikalbildende Substanz, für eine Verbindung, die eine Polymerisationsreaktion oder vernetzende Polymerisationsreaktion des Klebstofffilms einleiten kann. Der Initiator, insbesondere Radikalinitiator, nimmt allerdings zu einem sehr geringen Anteil am Reaktionsgeschehen teil und bildet folglich keinen die Eigenschaften der Verklebung bestimmenden Polymeranteil.

In der vorliegenden Erfindung wird dem erfindungsgemäßen reaktiven Klebstofffilm ein Initiator, insbesondere Radikalinitiator, zugesetzt. Der Initiator ist bevorzugt so gewählt, dass er in der Mischung mit den reaktiven Monomeren beziehungsweise Reaktivharzen bei Temperaturen bis 90°C keine Polymerisation auslöst, auch nicht, wenn die Mischung mit UV- oder Blaulicht bestrahlt wird. Dies gilt, solange der Mischung kein Photoredox-Katalysator oder ein anderer aktivierender Stoff zugesetzt wird.

Bevorzugt werden Radikalinitiatoren. Daher umfasst der erfindungsgemäße lichthärtende, reaktive, haftklebrige Klebstofffilm in einer bevorzugten Ausführungsform einen Radikalinitiator als Initiator (b). Es können alle im Stand der Technik bekannten Radikalinitiatoren eingesetzt werden. Bevorzugte Radikalinitiatoren sind Peroxide, insbesondere Hydroperoxide.

In einer besonders bevorzugten, erfindungsgemäßen Ausführungsform ist der Radikalinitiator ein organisches Peroxid, wie Peroxycarbonsäuren und Hydroperoxide. Besonders bevorzugt sind Hydroperoxide, insbesondere Diisopropylbenzol-hydroperoxid (CAS-Nr. 26762-93-6). Diisopropylbenzol-hydroperoxid wird bevorzugt in Form einer 50 gewichtsprozentigen Lösung von Diisopropylhydroperoxid in Diisopropylbenzol, erhältlich unter dem Handelsnamen Peroxan^{®} IHP-50 (Firma Pergan GmbH, Bocholt, Deutschland) eingesetzt. α,α-Dimethylbenzylhydroperoxid, welches auch als Cumolhydroperoxid (CAS-Nr. 80-15-9) bekannt ist, kann ebenfalls verwendet werden. Weiterhin können zum Beispiel auch p-Menthanhydroperoxid (CAS-Nr. 26762-92-5), tert.-Amyl-hydroperoxid (CAS-Nr. 3425-61-4), tert.-Butylhydroperoxid (CAS-Nr. 75-91-2) oder 1,1,3,3-Tetramethylbutyl-hydroperoxid (CAS-Nr. 5809-08-5) verwendet werden.

Der Anteil des Radikalinitiators liegt bevorzugt im Bereich von etwa 0,1 bis 10 Gew.%, besonders bevorzugt etwa 0,2 bis 4 Gew.%, bezogen auf die Gesamtmischung der Bestandteile des erfindungsgemäßen reaktiven Klebstofffilms. Am stärksten bevorzugt werden etwa 0,5 bis 2 Gew.% Radikalinitiator, bezogen auf die Gesamtmischung der Bestandteile des erfindungsgemäßen reaktiven Klebstofffilms, eingesetzt. Die Gesamtmischung der Bestandteile des erfindungsgemäßen reaktiven Klebstofffilms steht hier für die gesamte Menge der eingesetzten (a) reaktiven Monomere / Reaktivharze, (b) des Initiators, (c) des Photoredox-Katalysators, (d) des Polymerisats aus Monomeren, umfassend N-Vinylverbindungen, (e) des filmbildenden Polymers, sowie gegebenenfalls weiterer optional vorliegender Bestandteile, die als Summe in Gewichtsprozent (Gew.%) erhalten wird. Lösemittel beziehungsweise Wasser dienen nur der Herstellung und werden in dieser Betrachtung nicht zur Gesamtmischung der Bestandteile des erfindungsgemäßen reaktiven Klebstofffilms gezählt. Das gilt auch für Lösemittel, die gegebenenfalls in den kommerziell erhältlichen Rohstoffen bereits enthalten sind.

### Photoredox-Katalysator

Wie hier verwendet, steht der Begriff Photoredox-Katalysator für eine licht- oder UVlichtempfindliche Verbindung, die, wenn sie durch Licht oder UV-Licht angeregt wird, den Transfer von Elektronen zwischen chemischen Verbindungen vermitteln kann, die sonst langsamer oder gar nicht reagieren würden. Im Gegensatz zu einem Photoinitiator zerfällt ein Photoredox-Katalysator bei Bestrahlung mit Licht oder UV-Licht nicht in reaktive Spaltprodukte, sondern wird lediglich in einen angeregten Zustand versetzt, der in der Regel relativ langlebig ist und aus dem heraus Redox-Prozesse initiiert oder vermittelt werden können. Der Photoredox-Katalysator löst bevorzugt in der Mischung mit den reaktiven Monomeren beziehungsweise Reaktivharzen bei Temperaturen bis 90 °C keine Polymerisation aus, auch nicht, wenn die Mischung mit UV- oder Blaulicht bestrahlt wird. Dies gilt, solange der Mischung kein Radikal-Initiator oder ein anderer initiierender Stoff zugesetzt wird. Der Photoredox-Katalysator ist somit kein Initiator. Bei Bestrahlung mit UV- oder Blaulicht aktiviert er lediglich den Initiator, der dann die Polymerisation auslöst.

Als Photoredox-Katalysatoren können die dem Fachmann bekannten Photoredox-Katalysatoren eingesetzt werden. Viele der am häufigsten eingesetzten Photoredox-Katalysatoren sind Polypyridyl Übergangsmetallkomplexe, beispielsweise von Ruthenium und Iridium, wie z.B. Ru(bpm)₃²⁺ (z.B. Tris(2,2'-bipyrimide)ruthenium(II) dichlorid), Ru(bpz)₃²⁺ (z.B. Tris(2,2'-bipyrazine)ruthenium Bis(hexafluorophosphat)), Ru(bpy)₃²⁺, Ru(phen)₃²⁺ (z.B. Dichlorotris(1,10-phenanthrolin)ruthenium(II) chlorid), Ir[dF(CF₃)ppy]₂(dtbbpy)⁺ (z.B. [4,4'-*Bis*(1,1-dimethylethyl)-2,2'-bipyridin-*N*1,*N*1'] bis[3,5-difluor-2-[5-(trifluormethyl)-2-pyridinyl-*N*]phenyl-C]lridium(III) Hexafluorphosphat), Ir(ppy)₃, Ir(ppy)₂(dtbbpy)⁺ (z.B. [Ir(dtbbpy)(ppy)2] [PF6]), Ir(Fppy)₃ oder *fac*-Ir(ppy)₃ (fac-Tris(2-phenylpyridin)iridium(III)). Aber auch Kupferkomplexe, wie Cu(dap)²⁺ (z.B. Kupfer 2,9-bis(4-methoxyphenyl)-1,10-phenanthrolin chlorid) können eingesetzt werden.

In einer bevorzugten erfindungsgemäßen Ausführungsform ist der Photoredox-Katalysator ein Übergangsmetallkomplex mit Ruthenium als Zentralatom und Bipyridin oder ein einfach oder mehrfach substituiertes Bipyridin-Derivat als Liganden. In einer weiteren bevorzugten erfindungsgemäßen Ausführungsform ist der Photoredox-Katalysator ein Übergangsmetallkomplex mit Iridium als Zentralatom und Phenylpyridin oder ein einfach oder mehrfach substituiertes Phenylpyridin-Derivat als Liganden.

In einer besonders bevorzugten erfindungsgemäßen Ausführungsform ist der Photoredox-Katalysator ausgewählt aus:
i. [Tris(2,2'-bipyridyl)ruthenium(II)]²⁺, [Ru(bpy)₃]²⁺- Formel (la): 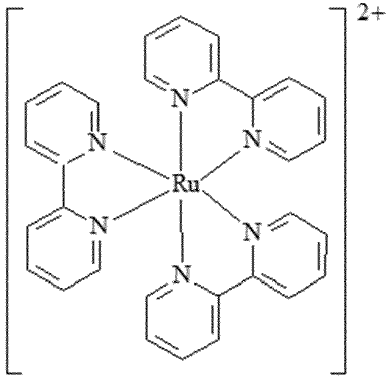
ii. Tris[2-(2,4-difluorophenyl)pyridin]iridium(III), Ir(Fppy)₃; CAS-Nr.: 387859-70-3 - Formel (Ib): 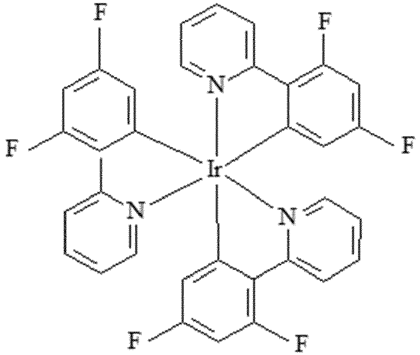
iii. Tris(2-phenylpyridinato)iridium(III), Ir(ppy)₃; CAS-Nr.: 94928-86-6 - Formel (Ic):

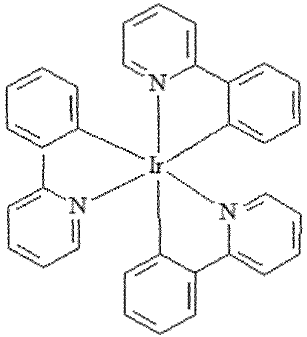

Das bevorzugte Gegenion des Kations der Formel (la) ist Chlorid. Das entsprechende kommerziell verfügbare Produkt enthält Kristallwasser. Die besonders bevorzugte Ausführungsform des Photoredox-Katalysators der Formel (la) ist somit Tris(2,2'-bipyridyl)ruthenium(II)chlorid Hexahydrat, (CAS-Nr.: 50525-27-4), erhältlich bei der Firma CHEMOS GmbH & Co. KG (Altdorf, Deutschland, http://www.chemos.de), ebenso wie der Photoredox-Katalysatoren der Formel (Ic). Der Photoredox-Katalysator mit der Formel (Ib) ist erhältlich bei der Firma Strem (Europe) (Bischheim, Frankreich, http://www.strem.com).

Der Anteil des Photoredox-Katalysators liegt bevorzugt im Bereich bis etwa 1 Gew.%, besonders bevorzugt bis zu 0,5 Gew.%, bezogen auf die Gesamtmischung der Bestandteile des erfindungsgemäßen reaktiven Klebstofffilms. Am stärksten bevorzugt werden etwa 0,01-0,1 Gew.% Photoredox-Katalysator, bezogen auf die Gesamtmischung der Bestandteile des erfindungsgemäßen reaktiven Klebstofffilms. Die Gesamtmischung der Bestandteile des erfindungsgemäßen reaktiven Klebstofffilms steht hier für die gesamte Menge der eingesetzten (a) reaktiven Monomere/ Reaktivharze, (b) des Initiators, (c) des Photoredox-Katalysators, (d) des Polymerisats aus Monomeren, umfassend N-Vinylverbindungen, (e) des filmbildenden Polymers, sowie gegebenenfalls weiterer optional vorliegender Bestandteile, die als Summe in Gewichtsprozent (Gew.%) erhalten wird. Lösemittel beziehungsweise Wasser dienen nur der Herstellung und werden in dieser Betrachtung nicht zur Gesamtmischung der Bestandteile des erfindungsgemäßen reaktiven Klebstofffilms gezählt. Das gilt auch für Lösemittel, die gegebenenfalls in den kommerziell erhältlichen Rohstoffen bereits enthalten sind.

Bevorzugt enthält der erfindungsgemäße, lichthärtende, reaktive, haftklebrige Klebstofffilm keine weiteren aktivierenden, initiierenden oder den Aktivierungs- und Initiierungsprozess **beeinflussende Bestandteile als die in dieser Schrift genannten.**

### Polymerisat aus Monomeren, umfassend N-Vinylverbindungen

Der erfindungsgemäße reaktive Klebstofffilm umfasst ein Polymerisat, erhalten durch radikalische Polymerisation von Kohlenstoff-Kohlenstoff-Doppelbindungen enthaltenden Monomeren, dadurch gekennzeichnet, dass diese Monomere N-Vinyl-Verbindungen umfassen. Typischerweise bestehen 10 Gew.%, 20 Gew.%, 30 Gew.%, 40 Gew.%, 50 Gew.%, 60 Gew.%, 70 Gew.%, 80 Gew.%, 90 Gew.% oder 100 Gew.% der Monomere des Polymerisats aus N-Vinylverbindungen. Vorteilhaft sind mindestens 50 Gew.% oder mindestens 80 Gew.%, bevorzugt mindestens 90 Gew.%, besonders bevorzugt 100 Gew.% der Monomere des Polymerisats N-Vinylverbindungen. Eine bevorzugte Ausführungsform des erfindungsgemäßen lichthärtenden, reaktiven, haftklebrigen Klebstofffilm ist dadurch gekennzeichnet, dass mindestens 50 Gew.% der Monomere des Polymerisats (d) N-Vinylverbindungen sind. Besonders bevorzugt sind mindestens 50 Gew.% oder mindestens 80 Gew.%, und noch stärker bevorzugt sind 100 Gew.% der Monomere des Polymerisats (d) N-Vinylverbindungen. Der Begriff Polymerisat steht hier als Oberbegriff sowohl für Homopolymerisate als auch für Copolymerisate. Das durch radikalische Polymerisation von Kohlenstoff-Kohlenstoff-Doppelbindungen enthaltenden Monomeren erhaltene Polymerisat enthält selbst keine Kohlenstoff-Kohlenstoff-Doppelbindung(en) oder nur solche, die durch Kettenabbruchreaktionen (Disproportionierungsreaktionen) entstanden sind. Es ist kein Reaktivharz. Es ist insbesondere nicht zu einer Radikalkettenpolymerisation in der Lage.

Die Kohlenstoff-Kohlenstoff-Doppelbindungen enthaltenden Monomere sind bevorzugt ausgewählt aus Acrylsäure, Acrylsäureestern, Methacrylsäure, Methacrylsäureestern und / oder Vinylverbindungen. Besonders bevorzugt sind lineare Alkylsäureester mit 2 bis 10 Kohlenstoffatomen im Alkylrest. Dies sind Ethylacrylat, n-Propylacrylat, n-Butylacrylat, n-Pentylacrylat, n-Hexylacrylat, n-Heptylacrylat, n-Octylacrylat, n-Nonylacrylat und n-Decylacrylat. Ganz besonders bevorzugt ist n-Butylacrylat.

Verzweigte nichtzyklische Acrylsäureester mit 4 bis einschließlich 12 Kohlenstoffatomen im Alkylrest des Alkohols werden ebenfalls bevorzugt ausgewählt. Ganz besonders bevorzugt sind 2-Ethylhexylacrylat (EHA), 2-Propylheptylacrylat, Isooctylacrylat, iso-Butylacrylat, isoAmylacrylat und/oder iso-Decylacrylat.

Die N-Vinylverbindungen des Polymerisats sind vorteilhaft Verbindungen entsprechend der Formel (II) oder umfassen eine Struktureinheit der Formel (II), 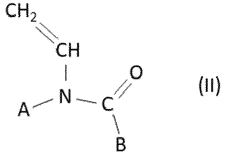 wobei
- A ein organischer Rest R oder H ist,
- B ein organischer Rest R oder H oder OR oder OH oder NR₂ oder NHR oder NH₂ ist,
- R unabhängig voneinander für einen substituierten oder unsubstituierten verzweigten, cyclischen oder linearen C₁₋₂₀-Alkyl-Rest oder C₂₋₂₀-Alkenyl-Rest; oder einen substituierten oder unsubstituierten Aryl- bzw. Heteroaryl steht,
- A und B einen Ring bilden, beispielsweise Lactam oder Oxazolidinon, können.

Beispiele für solche N-Vinylverbindungen sind N-Vinylacetamid (CAS-Nr. 5202-78-8), N-Vinylcaprolactam (CAS-Nr.: 2235-00-9), N-Vinylpyrrolidon (CAS-Nr.: 88-12-0), N-Vinyl-N-Methylacetamid (CAS-Nr. 3195-78-6), 5-Methyl-3-vinyl-2-oxazolidinone (CAS-Nr. 3395-98-0) oder N-Vinyl Isobutyramid. Bevorzugt sind N-Vinyl enthaltende Lactame und N-Vinyl enthaltende Oxazolidinone. Vorteilhaft ist es, wenn die N-Vinylverbindungen des Polymerisats (d) N-Vinylcaprolactam (CAS-Nr.: 2235-00-9), N-Vinylpyrrolidon (CAS-Nr.: 88-12-0) oder 5-Methyl-3-vinyl-2-oxazolidinone (CAS-Nr.: 3395-98-0) sind. Bevorzugt sind N-Vinylcaprolactam oder N-Vinylpyrrolidon, und in einer besonders bevorzugten Ausführung ist der lichthärtende, reaktive, haftklebrige Klebstofffilm, dadurch gekennzeichnet, dass die N-Vinylverbindungen des Polymerisats (d) N-Vinylcaprolactam umfassen.

Der Anteil des Polymerisats aus Monomeren, umfassend N-Vinylverbindungen, liegt bevorzugt im Bereich von etwa 1 bis 50 Gew.%, besonders bevorzugt etwa im Bereich von 5 bis 30 Gew.%, bezogen auf die Gesamtmischung der Bestandteile des erfindungsgemäßen reaktiven Klebstofffilms. Stärker bevorzugt werden 8 bis 25 Gew.%, am stärksten bevorzugt etwa 10 bis 20 Gew.% des Polymerisats aus Monomeren, umfassend N-Vinylverbindungen, bezogen auf die Gesamtmischung der Bestandteile des erfindungsgemäßen reaktiven Klebstofffilms, eingesetzt.

Die Gesamtmischung der Bestandteile des erfindungsgemäßen reaktiven Klebstofffilms steht hier für die gesamte Menge der eingesetzten (a) reaktiven Monomere/ Reaktivharze, (b) des Initiators, (c) des Photoredox-Katalysators, (d) des Polymerisats aus Monomeren, umfassend N-Vinylverbindungen, (e) des filmbildenden Polymers, sowie gegebenenfalls weiterer optional vorliegender Bestandteile, die als Summe in Gewichtsprozent (Gew.%) erhalten wird. Lösemittel beziehungsweise Wasser dienen nur der Herstellung und werden in dieser Betrachtung nicht zur Gesamtmischung der Bestandteile des erfindungsgemäßen reaktiven Klebstofffilms gezählt. Das gilt auch für Lösemittel, die gegebenenfalls in den kommerziell erhältlichen Rohstoffen bereits enthalten sind.

### Filmbildendes Polymer

Der erfindungsgemäße reaktive Klebstofffilm umfasst ein filmbildendes Polymer. Ohne an eine bestimmte Theorie gebunden sein zu wollen, wird vermutet, dass das filmbildende Polymer die reaktiven Monomere/Reaktivharze und die übrigen Stoffe physikalisch bindet beziehungsweise in ihrer Beweglichkeit einschränkt. Das filmbildende Polymer scheint quasi wie ein Schwamm zu wirken und das Fließen der reaktiven Monomere/ Reaktivharze sowie der übrigen Stoffe zu verhindern oder zu verzögern. Es soll dem erfindungsgemäßen reaktiven Klebstofffilm somit seine Filmform verleihen und diese Form stabilisieren. Das filmbildende Polymer soll gegenüber den reaktiven Monomeren/ Reaktivharzen und den übrigen Stoffen im Wesentlichen inert sein. Inert bedeutet in diesem Zusammenhang, dass die reaktiven Monomere/ Reaktivharze vor der Lichthärtung unter geeignet gewählten Bedingungen, insbesondere bei Raumtemperatur (23 °C), im Wesentlichen nicht mit dem filmbildenden Polymer reagieren.

Geeignete filmbildende Polymere zur Verwendung in der vorliegenden Erfindung sind thermoplastische Polymere, wie z.B. Polyurethane, Polyester bzw. Copolyester, Polyamide bzw. Copolyamide, Polyacrylsäureester, Acrylsäure/Acrylsäureester-Copolymere (wie z.B. ein Copolymer aus n-Butylacrylat, Ethylacrylat und Acrylsäure), Polymethacrylsäureester, Methacrylsäure/Methacrylsäureester-Copolymere. Chemisch oder physikalisch vernetzte Stoffe der zuvor genannten Verbindungen sind ebenfalls denkbar. Darüber hinaus können auch Blends aus verschiedenen thermoplastischen Polymeren eingesetzt werden. Weiterhin sind auch Elastomere, thermoplastische Elastomere und Duromere allein oder im Gemisch als filmbildende Polymere denkbar.

Bevorzugt sind thermoplastische Polymere mit einer kristallinen Schmelztemperatur von kleiner als 100 °C und/oder einer Erweichungstemperatur von kleiner als 100 °C. In diesem Zusammenhang steht der Begriff Erweichungstemperatur für die Temperatur, ab der das thermoplastische Granulat mit sich selbst verklebt. Wenn es sich bei dem filmbildenden Polymer um ein semikristallines thermoplastisches Polymer handelt, dann weist es neben seiner Erweichungstemperatur (die mit dem Schmelzen der Kristallite zusammenhängt) sehr bevorzugt eine Glasübergangstemperatur von höchstens 25 °C, bevorzugt höchstens 0 °C, auf.

In einer bevorzugten, erfindungsgemäßen Ausführungsform wird ein thermoplastisches Polyurethan eingesetzt. Kommerziell erhältliche thermoplastisches Polyurethane sind zum Beispiel Desmocoll^{®} 530/1 und Desmocoll^{®} 540/3 sowie Desmomelt^{®} 530 von Covestro AG (Leverkusen, Deutschland) oder IROSTIC^{®} S-6558-06 und IROSTIC^{®} S 8612 von Huntsman (Huntsman Holland B.V., Botlek-Rotterdam, Niederlande) oder alternative Varianten aus diesen Produktlinien. Außerdem gibt es die Produktlinien Elastollan^{®} von BASF (Ludwigshafen, Deutschland) oder Pearlbond von Lubrizol (Lubrizol Advanced Materials Europe BVBA, Brüssel, Belgien). Vorzugsweise besitzt das thermoplastische Polyurethan eine Erweichungstemperatur von kleiner als 100 °C, insbesondere kleiner als 80 °C. Bevorzugte Beispiele für solche thermoplastische Polyurethane sind Desmomelt^{®} 530 und IROSTIC^{®} S-6558-06. Desmomelt^{®} 530 ist ein hydroxyl-terminiertes, weitgehend lineares, thermoplastisches, stark kristallisierendes Polyurethan-Elastomer. IROSTIC^{®} S-6558-06 ist laut Herstellerangabe ein lineares thermoplastisches Polyurethan für lösungsmittelbasierte Klebstoffe. Die Merkmale sind laut Herstellerangabe: sehr geringe Kristallisationsrate, lange offene Zeit, sehr niedrige Aktivierungstemperatur.

Besonders bevorzugt sind thermoplastische Polyurethane, mit einer sehr niedrigen Kristallisationsrate. Insbesondere sind thermoplastische Polyurethane bevorzugt, die in ihrem DSC-Diagramm im Temperaturbereich zwischen minus 140 °C und plus 250 °C in der zweiten Aufheizkurve kein Signal (Peak) für einen kristallinen Schmelzpunkt zeigen. In einer bevorzugten Ausführungsform ist der erfindungsgemäße lichthärtende, reaktive, haftklebrige Klebstofffilm, dadurch gekennzeichnet, dass das filmbildende Polymer (e) ein thermoplastisches Polyurethan ist, dessen DSC-Diagramm im Temperaturbereich zwischen minus 140 °C und plus 250 °C in der zweiten Aufheizkurve kein Signal für einen kristallinen Schmelzpunkt zeigt. Das Aufheizen, Abkühlen und Wieder-Aufheizen erfolgt dabei jeweils mit einer Heizrate von 10 Kelvin pro Minute (bei 10 mg Probenmenge). Die Abkürzung DSC steht für die bekannte thermoanalytische Methode "Differential Scanning Calorimetry" nach DIN En ISO 11357-1 bis -8 (deutsche Fassungen: EN ISO 11357-1:2016, /-2:2020, /-3:2018, /-4:2021, /-5:2014, /-6:2018, /-7:2015 und /-8:2021). Das Verfahren für die Bestimmung der Schmelz- und Kristallisationstemperatur sowie der Schmelz- und Kristallisationsenthalpie wir in DIN EN ISO 11357-3:2018 (deutsche Fassung) festgelegt.

Daher wird in einer besonders bevorzugten, erfindungsgemäßen Ausführungsform IROSTIC^{®} S-6558-06 als filmbildendes Polymer eingesetzt, da es eine sehr geringe Kristallisationsrate hat und im DSC-Diagramm im Temperaturbereich zwischen minus 140 °C und plus 250 °C in der zweiten Aufheizkurve kein Signal (Peak) eines kristallinen Schmelzpunktes zeigt.

Der Anteil des filmbildenden Polymers liegt bevorzugt im Bereich von etwa 10 bis 90 Gew.%, besonders bevorzugt etwa 20 bis 60 Gew.%, bezogen auf die Gesamtmischung der Bestandteile des erfindungsgemäßen reaktiven Klebstofffilms. Stärker bevorzugt werden 30 bis 50 Gew.%, am stärksten bevorzugt etwa 35 bis 45 Gew.% des filmbildenden Polymers, bezogen auf die Gesamtmischung der Bestandteile des erfindungsgemäßen reaktiven Klebstofffilms, eingesetzt. Die Gesamtmischung der Bestandteile des erfindungsgemäßen reaktiven Klebstofffilms steht hier für die gesamte Menge der eingesetzten (a) reaktiven Monomere/ Reaktivharze, (b) des Initiators, (c) des Photoredox-Katalysators, (d) des Polymerisats aus Monomeren, umfassend N-Vinylverbindungen, (e) des filmbildenden Polymers, sowie gegebenenfalls weiterer optional vorliegender Bestandteile, die als Summe in Gewichtsprozent (Gew.%) erhalten wird. Lösemittel beziehungsweise Wasser dienen nur der Herstellung und werden in dieser Betrachtung nicht zur Gesamtmischung der Bestandteile des erfindungsgemäßen reaktiven Klebstofffilms gezählt. Das gilt auch für Lösemittel, die gegebenenfalls in den kommerziell erhältlichen Rohstoffen bereits enthalten sind.

### Weitere Bestandteile des reaktiven Klebstofffilms

Der erfindungsgemäße reaktive Klebstofffilm kann gegebenenfalls weitere Additive und/oder Hilfsstoffe enthalten, die im Stand der Technik bekannt sind. Der Anteil der weiteren Additive und/oder Hilfsstoffe kann im Bereich von 0 bis etwa 20 Gew.%, bevorzugt 0 bis etwa 15 Gew.%, stärker bevorzugt 0 bis etwa 10 Gew.%, und am stärksten bevorzugt 0 bis etwa 5 Gew.% liegen, bezogen auf die Gesamtmischung der Bestandteile des erfindungsgemäßen reaktiven Klebstofffilms. Als weitere Additive und/oder Hilfsstoffe sind beispielsweise Füllstoffe, Farbstoffe, Keimbildner, rheologische Additive (zum Beispiel pyrogene Kieselsäure), Blähmittel, klebverstärkende Additive (Haftvermittler, insbesondere Silane und Tackifier-Harze), Compoundierungsmittel, Weichmacher und/oder Alterungs-, Licht- und UV-Schutzmittel, zum Beispiel in Form von primären und sekundären Antioxidantien zu nennen. Die weiteren Bestandteile der erfindungsgemäßen reaktiven Klebstofffilme können gleichzeitig auch reaktive Monomere sein. Dies kann insbesondere bevorzugt bei Silan-Haftvermittlern der Fall sein. Zu nennen ist in diesem Zusammenhang zum Beispiel 3-Trimethoxysilylpropylmethacrylat (CAS-Nr.: 2530-85-0), erhältlich unter dem Handelsnamen Dynasylan^{®} MEMO (Evonik AG, Essen, Deutschland).

### Reaktiver Klebstofffilm

Der erfindungsgemäße, lichthärtende, reaktive, haftklebrige Klebstofffilm liegt in Form eines Films vor. Wie hierin verwendet, soll der Begriff "Klebstofffilm" (oder auch Klebstoffschicht, Klebstofffolie) eine vollständig oder nicht-vollständig bereitgestellte Auftragung der lichthärtenden, reaktiven Klebstoffmischung, wie nachfolgend beschrieben, umfassen. So kann beispielsweise eine punktförmige Auftragung des Klebstoffs, die die zu verklebende Substratoberfläche(n) nicht vollständig bedeckt, ebenfalls zu einer dauerhaften Verklebung im Sinne der vorliegenden Erfindung führen.

Der erfindungsgemäße, lichthärtende, reaktive, haftklebrige Klebstofffilm umfasst in einer bevorzugten Ausführungsform (a) 10 bis 80 Gew.% mindestens eines reaktiven Monomers oder Reaktivharzes, (b) 0,1 bis 10,0 Gew.% Initiator, (c) bis zu 1,0 Gew.% Photoredox-Katalysator, (d) 1,0 bis 50,0 Gew.% Polymerisat, erhalten durch radikalische Polymerisation von Kohlenstoff-Kohlenstoff-Doppelbindungen enthaltenden Monomeren, dadurch gekennzeichnet, dass diese Monomere N-Vinyl-Verbindungen umfassen, und (e) 10 bis 90 Gew.% filmbildendes Polymer sowie ggf. (f) 0 bis etwa 15 Gew.% weitere Additive und/oder Hilfsstoffe. Noch bevorzugter sind (a) 20 bis 60 Gew.% mindestens eines reaktiven Monomers oder Reaktivharzes, (b) 0,2 bis 4,0 Gew.% Initiator, (c) bis zu 0,5 Gew.% Photoredox-Katalysator, (d) 5,0 bis 30,0 Gew.% Polymerisat, erhalten durch radikalische Polymerisation von Kohlenstoff-Kohlenstoff-Doppelbindungen enthaltenden Monomeren, dadurch gekennzeichnet, dass diese Monomere N-Vinyl-Verbindungen umfassen, und (e) 20 bis 60 Gew.% filmbildendes Polymer sowie ggf. (f) 0 bis etwa 10 Gew.% weitere Additive und/oder Hilfsstoffe. Am stärksten bevorzugt sind (a) etwa 39 Gew.% mindestens eines reaktiven Monomers oder Reaktivharzes, (b) 1,3 Gew.% Initiator, (c) etwa 0,03 Gew.% Photoredox-Katalysator, (d) etwa 15 Gew.% Polymerisat, erhalten durch radikalische Polymerisation von Kohlenstoff-Kohlenstoff-Doppelbindungen enthaltenden Monomeren, dadurch gekennzeichnet, dass diese Monomere N-Vinyl-Verbindungen umfassen, (e) etwa 41 Gew.% filmbildendes Polymer, und (f) etwa 4 Gew. % Additiv.

In einer besonders bevorzugten Ausführungsform umfasst der erfindungsgemäße, lichthärtende, reaktive, haftklebrige Klebstofffilm eine Mischung der folgenden Bestandteile: thermoplastisches Polyurethan, insbesondere Irostic^{®} S-6558-06 oder Desmomelt^{®} 530, Poly(N-Vinylcaprolactam) oder Poly(N-Vinylpyrrolidon), 2-Hydroxy-3-phenoxy-propylacrylat oder 2-[[(Butylamino)carbonyl]oxy]ethyl acrylat, rheologisches Additiv, insbesondere pyrogene Kieselsäure, Diisopropylhydroperoxid und Tris(2,2'-bipyridyl)ruthenium(II)chlorid Hexahydrat.

Eine besonders bevorzugte Ausführungsform enthält etwa 35-45 Gew.% des filmbildenden Polymers, 10-20 Gew.% Poly(N-Vinylcaprolactam) oder Poly(N-Vinylpyrrolidon), 30-50 Gew.% 2-Hydroxy-3-phenoxy-propylacrylatoder2-[[(Butylamino) carbonyl]oxy]ethyl acrylat, 2-5 Gew.% rheologisches Additiv, 0,5-2,0 Gew.% Diisopropylhydroperoxid und 0,01-0,1 Gew.% Tris(2,2'-bipyridyl)ruthenium(II)chlorid Hexahydrat, bezogen auf die Gesamtmischung der Bestandteile des erfindungsgemäßen reaktiven Klebstofffilms.

Wie hierin verwendet, bezieht sich die Gesamtmischung der Bestandteile des erfindungsgemäßen reaktiven Klebstofffilms auf die gesamte Menge der eingesetzten (a) reaktiven Monomere/ Reaktivharze, (b) des Initiators, (c) des Photoredox-Katalysators, (d) des Polymerisats aus Monomeren, umfassend N-Vinylverbindungen, (e) des filmbildenden Polymers, sowie gegebenenfalls der weiteren optional vorliegenden Bestandteile, die als Summe in Gewichtsprozent (Gew.%) erhalten wird. Lösemittel beziehungsweise Wasser dienen nur der Herstellung und werden in dieser Betrachtung nicht zur Gesamtmischung der Bestandteile des erfindungsgemäßen reaktiven Klebstofffilms gezählt. Das gilt auch für Lösemittel, die gegebenenfalls in den kommerziell erhältlichen Rohstoffen bereits enthalten sind.

Der erfindungsgemäße reaktive Klebstofffilm besitzt bevorzugt eine Schichtdicke (gemessen mit einem handelsüblichen Dickenmessgerät, z.B. DM 2000 der Firma Wolf Messtechnik GmbH) im Bereich von etwa 20 bis 200 µm, bevorzugt etwa 30 bis 100 µm, bevorzugter etwa 40 bis 60 µm und besonders bevorzugt etwa 50 µm. Zur Herstellung größerer Schichtdicken kann es von Vorteil sein, mehrere Klebstofffilmschichten zusammen zu laminieren.

Zudem ist der erfindungsgemäße, reaktive Klebstofffilm dadurch gekennzeichnet, dass er vor der Lichthärtung haftklebrige Eigenschaften besitzt. Als haftklebrige Stoffe sind gemäß Römpp (Römpp Online 2013, Dokumentkennung RD-08-00162) solche viskoelastischen Klebstofffilme definiert, deren abgebundener, trockener Film bei Raumtemperatur permanent klebrig ist und klebfähig bleibt. Die Haftklebung erfolgt durch leichten Anpressdruck sofort auf fast allen Substraten. Als leichter Anpressdruck ist hier ein Anpressdruck von größer 0 bar, der für eine Dauer von größer 0 Sekunden ausgeübt wird, gemeint.

Weiterhin kann der erfindungsgemäße lichthärtende, reaktive, haftklebrige Klebstofffilm weitere Filme, Folien, Schichten, Träger, Klebstofffilme, Haftklebstofffilme, Trennpapiere und/oder Trennliner umfassen.

Geeignete Trägermaterialien sind einem Fachmann auf dem Gebiet bekannt. Beispielsweise können als permanente Träger Folien (Polyester, PET, PE, PP, BOPP, PVC, Polyimide), Vliese, Schäume, Gewebe und/oder Gewebefolien verwendet werden. Temporäre Träger sollten mit einer Trennschicht versehen sein, wobei die Trennschicht in der Regel aus einem Silikontrennlack oder einem fluorierten Trennlack besteht oder polyolefinischen Charakter (HDPE, LDPE) aufweist.

In einer bevorzugten erfindungsgemäßen Ausführungsform formt der erfindungsgemäße reaktive Klebstofffilm (A1) zusammen mit einem weiteren erfindungsgemäßen reaktiven Klebstofffilm (A2) und einem Film, eine Folie, eine Schicht, oder einen Träger (B) ein reaktives, haftklebriges Klebeband. Das erfindungsgemäße reaktive, haftklebrige Klebeband umfasst die Schichten (A1), (A2) und (B) und ist dadurch charakterisiert, dass es einen lichthärtenden, reaktiven, haftklebrigen Klebstofffilm (A1) gemäß der vorliegenden Erfindung und einen weiteren lichthärtenden, reaktiven, haftklebrigen Klebstofffilm (A2) gemäß der vorliegenden Erfindung sowie einen Film, eine Folie, eine Schicht, oder einen Träger (B), flächig angeordnet zwischen den beiden reaktiven, haftklebrigen Klebstofffilmen, umfasst. Das Klebeband kann weitere Schichten, wie z.B. lichthärtende, reaktive, haftklebrige Klebstofffilme der vorliegenden Erfindungen oder andere Klebeschichten oder weitere Trägerschichten, umfassen. Bevorzugt ist der Film, die Folie, die Schicht oder der Träger (B) eine Polyethylen-, Polypropylen- oder Polyester-Folie, ganz besonders bevorzugt eine mit Trichloressigsäure geätzte Polyesterfolie.

In einer besonders bevorzugten Ausführungsform des Klebebands ist i der Film, die Folie, die Schicht, oder der Träger (B) flächig angeordnet zwischen den beiden reaktiven, haftklebrigen Klebstofffilmen (A1) und (A2) ist, so dass ein dreischichtiges, reaktives, haftklebriges Klebeband in der Schichtenanordnung (A1/B/A2) resultiert. Das reaktive, haftklebrige Klebeband (A1/B/A2) ist dadurch charakterisiert, dass es einen lichthärtenden, reaktiven, haftklebrigen Klebstofffilm (A1) gemäß der vorliegenden Erfindung und einen weiteren reaktiven, haftklebrigen Klebstofffilm (A2) gemäß der vorliegenden Erfindung sowie einen Film, eine Folie, eine Schicht, oder einen Träger (B), flächig angeordnet zwischen den beiden reaktiven, haftklebrigen Klebstofffilmen (A1) und (A2), umfasst. In einer besonders bevorzugten erfindungsgemäßen Ausführungsform ist der zwischen den beiden erfindungsgemäßen, reaktiven, haftklebrigen Klebstofffilmen (A1) und (A2) angeordnete Film, die Folie, die Schicht oder der Träger (B) eine Polyethylen-, Polypropylen- oder Polyester-Folie, ganz besonders bevorzugt eine mit Trichloressigsäure geätzte Polyesterfolie. Eine solche geätzte Polyester-Folie in der Dicke 12 µm ist beispielsweise unter dem Handelsnamen Kemafoil^{®} HPH 100 12µ (Firma Coveme S.P.A, San Lazzaro di Savena, Italien) erhältlich.

### Verfahren zur Herstellung eines reaktiven Klebstofffilms

Die Herstellung des erfindungsgemäßen, lichthärtenden, reaktiven, haftklebrigen Klebstofffilms erfolgt spätestens ab der Zugabe des Photoredox-Katalysators unter Ausschluss von UV-Licht oder sichtbarem Licht der Wellenlänge, durch die der jeweilige Photoredox-Katalysator angeregt wird, insbesondere Violett- und Blaulicht. In der Regel sind dies Wellenlängen von kleiner 500 nm. Der Ausschluss kann in der Regel mit handelsüblichen Gelblichtleuchten sowie durch Abdeckung normaler Lichtquellen, die UV-Anteile und/ oder Violett- und Blaulichtanteile in ihrem Wellenlängenspektrum haben, mit handelsüblichen UV-Schutz-Gelblichtfolien erreicht werden.

Der erfindungsgemäße, reaktive Klebstofffilm wird durch die nachfolgend beschriebenen Verfahren hergestellt:
In einem ersten Schritt werden die Inhaltsstoffe (Bestandteile) in einem oder mehreren Lösemittel(n) und/oder Wasser gelöst bzw. fein verteilt. Geeignete Lösemittel sind im Stand der Technik bekannt, wobei bevorzugt Lösemittel eingesetzt werden, in denen mindestens einer der Inhaltsstoffe eine gute Löslichkeit aufweist. Besonders bevorzugt sind Aceton und Methylethylketon (MEK).

Wie hierin verwendet, umfasst der Begriff Inhaltsstoff (a) mindestens ein reaktives Monomer/ Reaktivharz, (b) einen Initiator, (c) einen Photoredox-Katalysator, (d) ein Polymerisat, erhalten durch radikalische Polymerisation von Kohlenstoff-Kohlenstoff-Doppelbindungen enthaltenden Monomeren, dadurch gekennzeichnet, dass diese Monomere N-Vinyl-Verbindungen umfassen, (e) ein filmbildendes Polymer, sowie gegebenenfalls die weiteren optional vorliegenden Bestandteile, wie oben definiert.

Anschließend werden die aufgelösten oder fein verteilten Inhaltsstoffe in einem zweiten Schritt mit üblichen Rührgeräten gemischt. Gegebenenfalls werden die Inhaltsstoffe gleichzeitig aufgelöst, feinverteilt und gemischt.

Daraufhin wird in einem dritten Schritt ein Film, eine Folie, eine Schicht, ein Träger, ein Klebstofffilm, ein Haftklebstofffilm, bevorzugt ein Trennliner oder ein Trennpapier mit der Mischung der aufgelösten, fein verteilten Inhaltsstoffe beschichtet. Die Beschichtung erfolgt nach den üblichen Techniken, die im Stand der Technik bekannt sind.

Nach der Beschichtung wird das Lösemittel in einem vierten Schritt durch Abdampfen entfernt. Dies erfolgt abhängig von den verwendeten Lösemitteln bevorzugt im Temperaturbereich von 60-80°C.

Gegebenenfalls kann der reaktive Klebstofffilm in einem weiteren Schritt zu einer Rolle aufgewickelt werden.

Zur Lagerung wird der erfindungsgemäße, reaktive Klebstofffilm mit einem Trennliner oder - papier abgedeckt.

Die Herstellung eines erfindungsgemäßen, dreischichtigen, reaktiven, haftklebrigen Klebebandes erfolgt durch die Herstellung eines ersten (A1) und eines zweiten (A2) erfindungsgemäßen, reaktiven, haftklebrigen Klebstofffilms, wobei die beiden erfindungsgemäßen reaktiven, haftklebrigen Klebstofffilme mit einem Film, einer Folie, einer Schicht, oder einem Träger (B) wahlweise in einem Kaschierprozess oder durch direkte Beschichtung in Kontakt gebracht werden, so dass ein dreischichtiges, reaktives, haftklebriges Klebeband in der Schichtenanordnung (A1/B/A2) resultiert.

### Substrate

Substrate, die für eine Verklebung mit dem erfindungsgemäßen, reaktiven Klebstofffilm geeignet sind, sind diverse Kunststoffe, Metalle, Glas und/oder Keramik. Die zu verklebenden Substrate können gleich oder verschieden sein. Sie können transparent oder nicht-transparent sein.

Bevorzugt wird der erfindungsgemäße, reaktive Klebstofffilm zur Verklebung von Kunststoffen, Metallen und Glas eingesetzt. Besonders bevorzugt werden Polycarbonat, Polyamid, eloxiertes Aluminium, Stahl (z.B. rostfreier Stahl) und Glas (insbesondere oberflächenbehandeltes Glas) verklebt.

Die zu verklebenden Metallsubstrate können generell aus allen geläufigen Metallen und Metalllegierungen gefertigt werden. Bevorzugt kommen Metalle, wie zum Beispiel Aluminium, Edelstahl, Stahl, Magnesium, Zink, Nickel, Messing, Kupfer, Titan, eisenhaltige Metalle und Legierungen zum Einsatz. Die zu verklebenden Teile können außerdem aus unterschiedlichen Metallen aufgebaut sein.

Geeignete Kunststoffsubstrate sind beispielsweise Polycarbonat (PC), Polyamid (PA), Acrylnitril-Butadien-Styrol-Copolymere (ABS), ABS/PC-Blends, PMMA, Glasfaserverstärkte Polyamide, Polyvinylchlorid, Polyvinylenfluorid, Cellulose Acetat, Cycloolefin-Copolymere, Flüssigkristallpolymere (LCP), Polylactid, Polyetherketone, Polyetherimid, Polyethersulfon, Polymethacrylmethylimid, Polymethylpenten, Polyphenylether, Polyphenylensulfid, Polyphthalamid, Polyurethane, Polyvinylacetat, Styrol Acrylnitril Copolymere, Polyacrylate bzw. Polymethacrylate, Polyoxymethylen, Acrylester-Styrol-Acrylnitril Copolymere, Polyethylen, Polystyrol, Polypropylen und/oder Polyester, wie z.B. Polybutylenterephthalate (PBT) und/oder Polyethylenterephthalat (PET).

Die Substrate können lackiert, bedruckt, bedampft oder besputtert sein.

Hinsichtlich ihrer Form sind die zu verklebenden Substrate bevorzugt eben oder zweidimensional gekrümmt. Je nach Krümmungsgrad können aber auch dreidimensional gekrümmte Substrate mit dem erfindungsgemäßen, reaktiven Klebstofffilm verklebt werden. Die zu verklebenden Substrate können auch die verschiedensten Funktionen einnehmen, wie zum Beispiel Gehäuse, Sichtfenster, Versteifungselemente, etc.

Gegebenenfalls kann es notwendig sein, dass die Oberflächen der zu verklebenden Substrate durch ein physikalisches, chemisches und/oder physikalisch-chemisches Verfahren vorbehandelt werden. Hier ist beispielsweise das Aufbringen eines Primers oder einer Haftvermittlerzusammensetzung vorteilhaft. Ebenso können eine Corona-, Plasma- oder Flammvorbehandlung vorteilhaft sein.

Vorteilhaft können mit dem erfindungsgemäßen, reaktiven Klebstofffilm Komponenten im Elektronik-Bereich, insbesondere Smartphone- und Tablet-Komponenten, wie zum Beispiel Touchscreens verklebt werden. Bevorzugte Verklebungen sind die Befestigung von Kameraobjektiven, Verklebung von flexiblen Displays von "Wearables" (wie z.B. fitness-Tracker und Smartwatches), Befestigung/Montage von Antennen oder von Hintergrundbeleuchtungseinheiten in Smartphones oder Tablets, FPC (Flexible Printed Circuit)-Montage oder Membranlaminierung und Montage von Lautsprechertönern.

### Verklebungsverfahren

Der erfindungsgemäße, reaktive Klebstofffilm kann in einem Verfahren zur Verklebung zweier Substrate, z.B. Substrat 1 (z.B. Polycarbonat) mit einem anderen Substrat 2 (z.B. Metall), eingesetzt werden, um einen Verbundkörper zu erhalten. Dieses erfindungsgemäße Verfahren zur Verklebung zweier Substrate umfasst die folgenden Schritte: (i) Bereitstellen des ersten Substrats und des zweiten Substrats; (ii) Anordnen des erfindungsgemäßen, reaktiven Klebstofffilms oder des erfindungsgemäßen reaktiven, haftklebrigen Klebebands auf Substrat 1; (iii) entweder vor oder nach dem Anordnen des Klebstofffilms oder des Klebebands auf dem Substrat 1, Bestrahlen des Klebstofffilms oder des Klebebands mit UV- oder Blaulicht, um einen bestrahlten Klebstofffilm oder ein bestrahltes Klebeband zu bilden und ein Härten zu bewirken; (iv) Anordnen der beiden Substrate, so dass diese durch den bestrahlten Klebstofffilm oder das bestrahltes Klebeband miteinander verbunden werden; und (v) nach dem Anordnen, Aushärten lassen des bestrahlten Klebstofffilms oder des bestrahltes Klebeband als Ergebnis des Bestrahlens. Alternativ dazu kann die Bestrahlung des Schritt (iii) auch nach dem Anordnen bzw. Verbinden der beiden Substrate (iv) stattfinden.

### Verbundkörper

Weiterhin wird erfindungsgemäß ein Verbundkörper umfassend zumindest zwei Verklebungsflächen bereitgestellt, bei dem die zwei Verklebungsflächen durch den gehärteten erfindungsgemäßen, reaktiven Klebstofffilm oder durch das gehärtete reaktive, haftklebrige Klebeband, wie oben definiert, verbunden sind.

### Produkteigenschaften

Der erfindungsgemäße reaktive Klebstofffilm zeigt hervorragende Produkteigenschaften, die auch für den Fachmann derartig nicht vorherzusehen waren. Der Klebstofffilm kann, abhängig vom verwendeten Photoredox-Katalysator mit einer handelsüblichen UV-LED-Lampe oder einer Blaulicht-LED-Lampe (z.B. 365 nm, 385 nm, 395 nm, 405 nm, 450 nm und 460 nm Wellenlänge) ausgehärtet werden. Überraschend wurde gefunden, dass in vielen Fällen wahlweise sowohl eine UV-LED-Lampe als auch eine Blaulicht-LED-Lampe gleichermaßen geeignet ist. Auch eine handelsübliche Quecksilberdampf-UV-Lampe kann geeignet sein. Als Beispiele für geeignete LED-Lichtquellen zur Härtung der erfindungsgemäßen reaktiven Klebstofffilme seien die folgenden Produkte der Firma Hönle (Dr. Hönle AG, Gilching, Deutschland, https://www.hoenle.de/) genannt:
a) LED Spot 100 HP IC 365 nm (UV-LED)
b) LED Spot 100 HP IC 460 nm (Blaulicht-LED)

Eine auf diese Lichtquellen abgestimmte Bestrahlungskammer ist der LED Cube 100 IC, ebenfalls von der Firma Hönle. Die geeignete Dosis liegt ungefähr im Bereich 10 bis 80 J/cm². Dazu wird an den genannten Geräten typischerweise eine Leistung von 30% bis 90% gewählt. Die Bestrahlungsdauer wird zwischen 10 und 60 Sekunden gewählt. Der Abstand zwischen der Lichtquelle und dem erfindungsgemäßen reaktiven Klebstofffilm beträgt ungefähr 2 bis 10 cm. Bei Verwendung anderer Geräte mit anderen Leistungen sind erhebliche Abweichungen von den genannten Richtwerten zu erwarten.

Nach erfolgter Bestrahlung härtet der Klebstofffilm nicht augenblicklich aus. Er bleibt zunächst haftklebrig. Das Verkleben beziehungsweise Fügen der Substrate ist innerhalb einer Zeitspanne von mindestens fünf Minuten möglich, abhängig vom verwendeten Photoredox-Katalysator und der genauen Klebstoffrezeptur teilweise auch bis zu 30 Minuten. Mit anderen Worten: der erfindungsgemäße Klebstofffilm hat nach dem Bestrahlen und somit der Initiierung der Härtung eine Offenzeit von mindestens fünf Minuten. Der erfindungsgemäße Klebstofffilm härtet nach Ende der Bestrahlung innerhalb einer Zeitspanne von ungefähr 24 Stunden vollständig aus. Die Aushärtung erfolgt unabhängig von Licht und damit auch im Dunkeln. Mit dem erfindungsgemäßen Klebstofffilm/ Klebstofffilm können somit auch nicht-transparente Substrate verklebt werden.

Mit dem erfindungsgemäßen reaktiven Klebstofffilm werden hohe Verklebungsfestigkeiten erzielt. In Push-Out Prüfungen können bei Verklebungen von Polycarbonat-Prüfkörpern Werte von größer als 8 MPa erreicht werden (siehe Beispiele). Auch Verklebungen von Stahl und eloxiertem Aluminium führen zu ähnlich hohen Verklebungsfestigkeiten. Sogar Polyamid, das gemeinhin als schwer zu verklebendes Substrat gilt, lässt sich selbst ohne Vorbehandlung gut mit dem erfindungsgemäßen reaktiven Klebstofffilm verkleben. Im Push-Out Test können Verklebungsfestigkeiten von größer 5 MPa erreicht werden (siehe Beispiele). Diese Größenordnung wird im allgemeinen Sprachgebrauch als "strukturell" bezeichnet.

Überraschend wurde gefunden, dass sich Verklebungen mit dem erfindungsgemäßen reaktiven Klebstofffilm durch eine hohe Feuchtwärmebeständigkeit auszeichnen. Die Push-Out Festigkeit einer ausgehärteten Verklebung nach einer dreitägigen Lagerung der verklebten Substrate bei 60°C und 95% relativer Luftfeuchtigkeit erreicht in der Regel mindestens 70% des Wertes vor der Feuchtwärmelagerung. Häufig werden nach der Feuchtwärmelagerung sogar höhere Festigkeiten erzielt als vor der Feuchtwärmelagerung.

### Experimenteller Teil

Die nachfolgenden Beispiele dienen zur Verdeutlichung der vorliegenden Erfindung, sollen aber keinesfalls als Einschränkung des Schutzbereichs verstanden werden.

In Tabelle 1 sind die zur Herstellung des erfindungsgemäßen lichthärtenden, haftklebrigen, reaktiven Klebstofffilms, des dreischichtigen, lichthärtenden, reaktiven, haftklebrigen Klebebandes sowie der Vergleichsbeispiele verwendeten Rohstoffe und Materialien aufgeführt, und zwar jeweils mit Handelsnamen, Hersteller- oder Bezugsquellenangabe und den für diese Erfindung relevanten technischen Daten.

**Tabelle 1: Zur Herstellung des erfindungsgemäßen, lichthärtenden, haftklebrigen, reaktiven Klebstofffilms, des dreischichtigen, lichthärtenden, reaktiven, haftklebrigen Klebebandes sowie der Vergleichsbeispiele verwendete Rohstoffe und Materialien**

| Handelsname | Beschreibung/ Erläuterung/ Abkürzung/ CAS-Nr. | Hersteller / Lieferant |
|---|---|---|
| Monomere | | |
| 2-Hydroxy-3-phenoxy-propylacrlat | CAS-Nr.: 16969-10-1 | Sigma-Aldrich |
| GENOMER^{®} 1122TF | 2-[[(Butylamino)carbonyl]oxy]ethyl acrylat, CAS-Nr.: 63225-53-6 | Rahn Chemie |
| Visiomer^{®} HEMATMDI | Diurethan dimethacrylat, Isomerenmischung, CAS-Nr.: 72869-86-4 | Evonik |
| 4-Acryloylmorpholin | CAS-Nr.: 5117-12-4 | Sigma-Aldrich |
| N-Vinylcaprolactam | CAS-Nr.: 2235-00-9 | Sigma-Aldrich |
| Di(trimethylolpropan)-tetraacrylat | CAS-Nr.: 94108-97-1 | Sigma-Aldrich |
| SR^{®} 531 | (5-Ethyl-1,3-dioxan-5-yl)methylacrylat, CAS-Nr.: 66492-51-1 | Sartomer-Arkema |
| 2-Ethylhexylacrylat | CAS-Nr.: 103-11-7 | Brenntag |
| Initiator | | |
| Peroxan^{®} IHP-50 | 50 gewichtsprozentige Lösung von Diisopropylhydroperoxid (CAS-Nr.: 26762-93-6) in Diisopropylbenzol | Pergan GmbH |
| Photoredox-Katalysator | | |
| Tris(2,2'-bipyridyl) ruthenium(II)chlorid Hexahydrat | Ru(bpy)₃Cl₂•6H₂O ; CAS-Nr.: 50525-27-4 | Chemos GmbH |
| Tris[2-(2,4-difluoro-phenyl)pyridin] iridium(III) | Ir(Fppy)₃ ; CAS-Nr.: 387859-70-3 | Strem Chemicals |
| Tris(2-phenylpyridinato) iridium(III) | Ir(ppy)₃ ; CAS-Nr.: 94928-86-6 | Chemos GmbH |
| Polymerisat | | |
| N-Vinylcaprolactam | CAS-Nr.: 2235-00-9 | Sigma-Aldrich |
| N-Butylacrylat | CAS-Nr.: 141-32-2 | Rohm und Haas |
| Vazo^{®} 67 | 2,2'-Azobis(2-methylbutyronitril); CAS-Nr.: 13472-08-7, Initiator für die Herstellung des Polymerisats | Chemours |
| Sokalan^{®} K30P | Poly(N-Vinylpyrrolidon) in Pulverform, lineares Homopolymer, | BASF |
| | Mw: 50000 g/mol; CAS-Nr.:9003-39-8 | |
| Filmbildendes Polymer | | |
| IROSTIC^{®} S-6558-06 | Lineares Polyurethan, sehr geringe | Huntsman Holland B.V. |
| | Kristallisationsrate | |
| Desmomelt^{®} 530 | Weitgehend lineares, stark kristallisierendes | Covestro |
| | Polyurethan-Elastomer | |
| N-Butylacrylat | CAS-Nr.: 141-32-2 | Rohm und Haas |
| Ethylacrylat | CAS-Nr.: 140-88-5 | Sigma-Aldrich |
| Acrylsäure | CAS-Nr.: 79-10-7 | BASF |
| Trägerfolie | | |
| Kemafoil^{®} HPH 100 12µ | Mit Trichloressigsäure geätzte Polyesterfolie, Dicke: 12µm | Coveme S.P.A |
| Weitere Bestandteile | | |
| Aerosil^{®} R202 | Hydrophobierte pyrogene Kieselsäure; CAS-Nr.: 7631-86-9 | Evonik AG, |
| Dynasylan^{®} MEMO | Trimethoxysilylpropylmethacrylat, CAS-Nr.: 2530-85-0 | Evonik AG |

Weiterhin fanden handelsübliche silikonisierte Trennliner (Trennfolien) Verwendung. Als Lösemittel wurden in den Beispielen und Vergleichsbeispielen Aceton (CAS-Nr.: 67-64-1), Methylethylketon (CAS-Nr.: 78-93-3), Isopropanol (CAS-Nr.: 67-63-0) und voll entsalztes Wasser verwendet.

### Herstellung einer Lösung des filmbildenden Polymers

Aus praktischen Gründen wurde zunächst eine Lösung des filmbildenden Polymers hergestellt.

### Polyurethan (PU) - Lösung:

Eine 20%ige Lösung des filmbildenden Polymers wurde hergestellt, indem zunächst wahlweise entweder 120 g Irostic^{®} S-6558-06 oder 120 g Desmomelt^{®} 530 mit 240 g Aceton und 240 g Methylethylketon in ein Schraubglas eingewogen wurden und das Schraubglas verschlossen wurde. Durch mehrtägiges Rollen des Schraubglases auf einer handelsüblichen Rollbank wurde das Polyurethan vollständig in Lösung gebracht. Je nach Rollgeschwindigkeit dauerte der Vorgang etwa ein bis sieben Tage. Alternativ kann die Lösung auch durch Rühren des Polyurethan-Granulats in der Mischung aus Aceton und Methylethylketon mit einem handelsüblichen Laborrührer hergestellt werden.

### Herstellung einer filmbildenden Acrylat-Copolymer-Lösung

### (Bezeichnung des Copolymers: AC-1, Bezeichnung der Copolymer-Lösung: AC-1-Lösung)

Ein für radikalische Polymerisationen konventioneller 10 L-Glasreaktor wurde mit 3,48 kg N-Butylacrylat, 0,4 kg Ethylacrylat, 0,12 kg Acrylsäure, 3,84 kg Aceton und 0,16 kg Isopropanol befüllt. Unter Durchleitung von Stickstoffgas wurde der Reaktor unter Rühren (70 U/min) auf 65 °C Manteltemperatur hochgeheizt. Bei Erreichen von 58 °C Innentemperatur wurden 2,0 g Vazo^{®} 67 zugegeben. Nach einer Stunde weiterem Rühren bei 65°C Manteltemperatur wurden weitere 2,0 g Vazo^{®} 67 zugegeben. Nach 6 Stunden weiterem Rühren bei 65 °C Manteltemperatur wurde die Drehzahl des Rührers auf 35 U/min herabgesetzt. Die Reaktionszeit betrug 20 Stunden. Nach dieser Zeit wurde die Lösung auf Raumtemperatur abgekühlt und mit Aceton auf einen Feststoffgehalt von 40,0 Gewichtsprozent verdünnt. Die Molmasse des erhaltenen Copolymers wurde mittels thermischer Feldfluss-Fraktionierung bestimmt. Ergebnis:
Mn = 155000 g/mol, Mw = 183000 g/mol.

### Herstellung eines Polymerisats aus Monomeren, umfassend N-Vinylverbindungen

Im Falle von Poly(N-Vinylpyrrolidon) wurde in den Beispielen das kommerzielle, pulverförmige Produkt Sokalan^{®} K30P verwendet.

Die übrigen Polymerisate wurden durch radikalische Polymerisation aus den kommerziell verfügbaren Monomeren hergestellt. Zur Herstellung des erfindungsgemäßen, reaktiven Klebstofffilms wurde in diesen Fällen jeweils die hergestellte Polymerisat-Lösung verwendet, ohne das Lösemittel vorher zu entfernen.

### Poly(N-Vinylcaprolactam) - Lösung:

Ein für radikalische Polymerisationen konventioneller 10 L-Glasreaktor wurde mit 4,0 kg N-Vinylcaprolactam, 3,84 kg Aceton und 0,16 kg Isopropanol befüllt. Unter Durchleitung von Stickstoffgas wurde der Reaktor unter Rühren (70 U/min) auf 65 °C Manteltemperatur geheizt. Bei Erreichen von 58°C Innentemperatur wurden 2,0 g Vazo^{®} 67 zugegeben. Nach einer Stunde weiterem Rühren bei 65 °C Manteltemperatur wurden weitere 2,0 g Vazo^{®} 67 zugegeben. Nach 6 Stunden weiterem Rühren bei 65 °C Manteltemperatur wurde die Drehzahl des Rührers auf 35 U/min herabgesetzt. Die Reaktionszeit betrug 20 Stunden. Nach dieser Zeit wurde die Lösung auf Raumtemperatur abgekühlt und mit Aceton auf einen Feststoffgehalt von 40,0 Gewichtsprozent verdünnt. Die Molmasse des erhaltenen Poly(N-Vinylcaprolactams) wurde mittels thermischer Feldfluss-Fraktionierung bestimmt. Ergebnis: Mn = 74000 g/mol, Mw = 116500 g/mol.

### Poly(N-Vinylcaprolactam/Butylacrylat) (50/50) - Lösung:

Ein für radikalische Polymerisationen konventioneller 10 L-Glasreaktor wurde mit 2,0 kg N-Vinylcaprolactam, 2,0 kg Butylacrylat, 3,84 kg Aceton und 0,16 kg Isopropanol befüllt. Unter Durchleitung von Stickstoffgas wurde der Reaktor unter Rühren (70 U/min) auf 65 °C Manteltemperatur geheizt. Bei Erreichen von 58 °C Innentemperatur wurden 2,0 g Vazo^{®} 67 zugegeben. Nach einer Stunde weiterem Rühren bei 65 °C Manteltemperatur wurden weitere 2,0 g Vazo^{®} 67 zugegeben. Nach 6 Stunden weiterem Rühren bei 65 °C Manteltemperatur wurde die Drehzahl des Rührers auf 35 U/min herabgesetzt. Die Reaktionszeit betrug 20 Stunden. Nach dieser Zeit wurde die Lösung auf Raumtemperatur abgekühlt und mit Aceton auf einen Feststoffgehalt von 40,0 Gewichtsprozent verdünnt. Die Molmasse des erhaltenen N-Vinylcaprolactam/Butylacrylat-Copolymers wurde mittels thermischer Feldfluss-Fraktionierung bestimmt. Ergebnis:
Mn = 83000 g/mol, Mw = 124000 g/mol.

### Poly(N-Vinylcaprolactam/Butylacrylat) (80/20) - Lösung:

Ein für radikalische Polymerisationen konventioneller 10 L-Glasreaktor wurde mit 3,2 kg N-Vinylcaprolactam, 0,8 kg Butylacrylat, 3,84 kg Aceton und 0,16 kg Isopropanol befüllt. Unter Durchleitung von Stickstoffgas wurde der Reaktor unter Rühren (70 U/min) auf 65 °C Manteltemperatur geheizt. Bei Erreichen von 58 °C Innentemperatur wurden 2,0 g Vazo^{®} 67 zugegeben. Nach einer Stunde weiterem Rühren bei 65 °C Manteltemperatur wurden weitere 2,0 g Vazo^{®} 67 zugegeben. Nach 6 Stunden weiterem Rühren bei 65 °C Manteltemperatur wurde die Drehzahl des Rührers auf 35 U/min herabgesetzt. Die Reaktionszeit betrug 20 Stunden. Nach dieser Zeit wurde die Lösung auf Raumtemperatur abgekühlt und mit Aceton auf einen Feststoffgehalt von 40,0 Gewichtsprozent verdünnt. Die Molmasse des erhaltenen N-Vinylcaprolactam/Butylacrylat-Copolymers wurde mittels thermischer Feldfluss-Fraktionierung bestimmt. Ergebnis:
Mn = 78000 g/mol, Mw = 120500 g/mol.

### Herstellung einer wässrigen Photoredox-Katalysator-Lösung

Es wurde zunächst eine 5 gewichtsprozentige wässrige Lösung dieses Photoredox-Katalysators hergestellt.

### Wässrige Tris(2,2'-bipyridyl)ruthenium(II) chlorid hexahydrat-Lösung

Unter Gelblicht wurden 5 g Tris(2,2'-bipyridyl)ruthenium(II)chlorid Hexahydrat und 95 g voll entsalztes Wasser in ein braunes Schraubglas eingewogen. Das Schraubglas wurde verschlossen. Durch 8 Stunden Rollen des Schraubglases auf einer Rollbank wurde das Tris(2,2'-bipyridyl)ruthenium(II)chlorid Hexahydrat vollständig in Lösung gebracht.

### Beispiel 1

### Herstellen eines erfindungsgemäßen, reaktiven Klebstofffilms und eines erfindungsgemäßen, dreischichtigen, reaktiven Klebebandes

In einem braunen Schraubglas wurden 70,66 g der 20 Gew.%igen Lösung von Desmomelt^{®} 530 in Aceton/Methylethylketon (PU-Lösung), 13,25 g der 40 Gew.%igen Poly(N-Vinylcaprolactam) - Lösung, 13,66 g 2-Hydroxy-3-phenoxy-propylacrylat, und 1,34 g Aerosil^{®} R202 eingewogen und mit einem handelsüblichen Laborrührer 15 Minuten bei mittlerer Drehzahl (500-1000 U/min) gemischt. Sodann wurden 0,88 g Peroxan^{®} IHP-50 (enthält 50 Gew.% Diisopropylhydroperoxid) zugegeben. Dieses wurde 5 Minuten bei mittlerer Drehzahl eingemischt.

Alle weiteren Operationen erfolgten unter Gelblicht. Als Gelblicht-Deckenbeleuchtung wurde die Leuchtstofflampe LT35WT5EQ /Yellow Special von der Firma NARVA Lichtquellen GmbH (NARVA Lichtquellen GmbH + Co. KG, Brand-Erbisdorf, Deutschland, www.narva-bel.de) gewählt, die Wellenlängen kleiner 500 nm sperrt. Zum Abdecken noch vorhandenen Restlichtes aus anderen Lichtquellen wurde die Gelbfolie Metolight SFLY-5 (ASMETEC GmbH, Kirchheimbolanden, Deutschland, www.asmetec.de) gewählt, die Wellenlängen kleiner 470 nm herausfiltert.

Es wurden 0,21 g der 5 Gew.%igen, wässrigen Tris(2,2'-bipyridyl)ruthenium(II)chlorid Hexahydrat-Lösung zugegeben und 5 Minuten mit dem Laborrührer bei mittlerer Drehzahl eingemischt. Danach wurde die Mischung 24 Stunden auf einer handelsüblichen Rollbank weiter gemischt.

Die erhaltene homogene Mischung wurde mit Hilfe eines handelsüblichen Laborstreichtisches (zum Beispiel von der Firma SMO, Sondermaschinen Oschersleben GmbH, Oschersleben, Deutschland) mit einem Streichmesser auf einer silikonisierten Polyesterfolie (Trennliner) dreimal hintereinander ausgestrichen, so dass drei Filme erhalten werden. Anschließend wurde das Lösemittel bei 60 °C im Umlufttrockenschrank 15 Minuten abgedampft. Die Spaltbreite beim Ausstreichen wurde variiert. Sie wurde zweimal so eingestellt, dass nach dem Abdampfen des Lösemittels jeweils ein 50 µm dicker Film erhalten wurde. Beim dritten Ausstreichversuch wurde die Spaltbreite so eingestellt, dass nach dem Abdampfen des Lösemittels ein 100 µm dicker Film erhalten wurde. Der erhaltene lichthärtende, reaktive, haftklebrige, 100 µm dicke Klebstofffilm wurde mit einer zweiten silikonisierten Polyesterfolie (Trennliner) abgedeckt. Anschließend wurden daraus kreisförmige Stanzlinge (Ronden) mit einem Durchmesser von 21 mm ausgestanzt. und in einer Kunststoffdose bis zur Prüfung lichtdicht aufbewahrt. Die Prüfung erfolgte zwei Wochen nach Herstellung der Stanzlinge sowie nach einem halben Jahr Lagerung der Stanzlinge bei 23°C und 50% relativer Luftfeuchtigkeit.

Zur Herstellung eines erfindungsgemäßen, dreischichtigen, reaktiven Klebebandes wurde der erste der beiden 50 µm dicken, reaktiven Klebstofffilme auf die mit Trichloressigsäure geätzte Polyesterfolie Kemafoil^{®} HPH 100 12µ kaschiert. Dies erfolgte bei Raumtemperatur, zum Beispiel mit Hilfe einer glatten Laminierrolle (Andruckrolle) unter leichtem Andruck. Danach wurde der zweite 50 µm dicke, reaktive Klebstofffilm in gleicher Weise auf die andere Seite der mit Trichloressigsäure geätzten Polyesterfolie kaschiert. Das so erhaltene dreischichtige, lichthärtende, reaktive haftklebrige Klebeband wurde von beiden Seiten mit jeweils einer silikonisierten Polyesterfolie (Trennliner) abgedeckt. Anschließend wurden daraus ringförmige Stanzlinge mit einem Außendurchmesser von 18 mm und einem Innendurchmesser von 13 mm ausgestanzt. Auch diese wurden in einer Kunststoffdose bis zur Prüfung lichtdicht aufbewahrt. Auch hier erfolgte die Prüfung zwei Wochen nach Herstellung der Stanzlinge sowie nach einem halben Jahr Lagerung der Stanzlinge bei 23 °C und 50% relativer Luftfeuchtigkeit.

Die prozentuale Zusammensetzung der Einwaagen zur Herstellung der Lösung/ Mischung des lichthärtenden, reaktiven, haftklebrigen Klebstofffilms sowie die prozentuale Zusammensetzung des lichthärtenden, reaktiven, haftklebrigen Klebstofffilms selbst sind in den beiden folgenden Tabellen aufgeführt:

### Beispiel 1, Prozentuale Zusammensetzung der Lösung/ Mischung zur Herstellung des reaktiven Klebstofffilms

| Rohstoffe und Rohstoffzubereitungen inklusive Lösungsmittel | Gewichtsprozent Einwaage |
|---|---|
| 20 gewichtsprozentige Desmomelt^{®} 530-Lösung | 70,66 |
| 40 gewichtsprozentige Poly(N-Vinylcaprolactam) - Lösung | 13,25 |
| 2-Hydroxy-3-phenoxy-propylacrylat | 13,66 |
| Aerosil^{®} R202 | 1,34 |
| Peroxan^{®} IHP-50 | 0,88 |
| 5 Gew.%ige Tris(2,2'-bipyridyl)ruthenium(II) chlorid hexahydrat-Lösung | 0,21 |
| Summe | 100,00 |

### Beispiel 1, Prozentuale Zusammensetzung des reaktiven Klebstofffilms

| Rohstoffe ohne Lösungsmittel | Gewichtsprozent Feststoff |
|---|---|
| Desmomelt^{®} 530 | 40,50 |
| Poly(N-Vinylcaprolactam) | 15,19 |
| 2-Hydroxy-3-phenoxy-propylacrylat | 39,16 |
| Aerosil^{®} R202 | 3,85 |
| Diisopropylhydroperoxid | 1,27 |
| Tris(2,2'-bipyridyl)ruthenium(II) chlorid hexahydrat | 0,03 |
| Summe | 100,00 |

In analoger Weise wie in Beispiel 1 wurden die erfindungsgemäßen, reaktiven Klebstofffilme und die erfindungsgemäßen, dreischichtigen, reaktiven Klebebänder der weiteren Beispiele und Vergleichsbeispiele hergestellt.

Die folgenden Tabellen geben Auskunft über die prozentualen Zusammensetzungen der Lösungen/ Mischungen zur Herstellung der reaktiven Klebstofffilme und der prozentualen Zusammensetzungen der von den Lösungsmitteln befreiten reaktiven Klebstofffilme in den weiteren Beispielen und Vergleichsbeispielen.

### Beispiel 2, Prozentuale Zusammensetzung der Lösung/ Mischung zur Herstellung des reaktiven Klebstofffilms

| Rohstoffe und Rohstoffzubereitungen inklusive Lösungsmittel | Gewichtsprozent Einwaage |
|---|---|
| 20 gewichtsprozentige IROSTIC^{®} S-6558-06-Lösung | 70,66 |
| 40 gewichtsprozentige Poly(N-Vinylcaprolactam) - Lösung | 13,25 |
| GENOMER^{®} 1122TF | 13,66 |
| Aerosil^{®} R202 | 1,34 |
| Peroxan^{®} IHP-50 | 0,88 |
| 5 Gew.%ige Tris(2,2'-bipyridyl)ruthenium(II) chlorid hexahydrat-Lösung | 0,21 |
| Summe | 100,00 |

### Beispiel 2, Prozentuale Zusammensetzung des reaktiven Klebstofffilms

| Rohstoffe ohne Lösungsmittel | Gewichtsprozent Feststoff |
|---|---|
| IROSTIC^{®} S-6558-06 | 40,50 |
| Poly(N-Vinylcaprolactam) | 15,19 |
| GENOMER^{®} 1122TF | 39,16 |
| Aerosil^{®} R202 | 3,85 |
| Diisopropylhydroperoxid | 1,27 |
| Tris(2,2'-bipyridyl)ruthenium(II) chlorid hexahydrat | 0,03 |
| Summe | 100,00 |

### Beispiel 3, Prozentuale Zusammensetzung der Lösung/ Mischung zur Herstellung des reaktiven Klebstofffilms

| Rohstoffe und Rohstoffzubereitungen inklusive Lösungsmittel | Gewichtsprozent Einwaage |
|---|---|
| 20 gewichtsprozentige IROSTIC^{®} S-6558-06-Lösung | 70,66 |
| 40 gewichtsprozentige Poly(N-Vinylcaprolactam) - Lösung | 13,25 |
| Visiomer^{®} HEMATMDI | 13,66 |
| Aerosil^{®} R202 | 1,34 |
| Peroxan^{®} IHP-50 | 0,88 |
| 5 Gew.%ige Tris(2,2'-bipyridyl)ruthenium(II) chlorid hexahydrat-Lösung | 0,21 |
| Summe | 100,00 |

### Beispiel 3, Prozentuale Zusammensetzung des reaktiven Klebstofffilms

| Rohstoffe ohne Lösungsmittel | Gewichtsprozent Feststoff |
|---|---|
| IROSTIC^{®} S-6558-06 | 40,50 |
| Poly(N-Vinylcaprolactam) | 15,19 |
| Visiomer^{®} HEMATMDI | 39,16 |
| Aerosil^{®} R202 | 3,85 |
| Diisopropylhydroperoxid | 1,27 |
| Tris(2,2'-bipyridyl)ruthenium(II) chlorid hexahydrat | 0,03 |
| Summe | 100,00 |

### Beispiel 4, Prozentuale Zusammensetzung der Lösung/ Mischung zur Herstellung des reaktiven Klebstofffilms

| Rohstoffe und Rohstoffzubereitungen inklusive Lösungsmittel | Gewichtsprozent Einwaage |
|---|---|
| 20 gewichtsprozentige IROSTIC^{®} S-6558-06-Lösung | 70,76 |
| 40 gewichtsprozentige Poly(N-Vinylcaprolactam) - Lösung | 13,27 |
| 2-Hydroxy-3-phenoxy-propylacrylat | 13,68 |
| Aerosil^{®} R202 | 1,34 |
| Peroxan^{®} IHP-50 | 0,88 |
| Tris(2-phenylpyridinato)iridium(III) | 0,07 |
| Summe | 100,00 |

### Beispiel 4, Prozentuale Zusammensetzung des reaktiven Klebstofffilms

| Rohstoffe ohne Lösungsmittel | Gewichtsprozent Feststoff |
|---|---|
| IROSTIC^{®} S-6558-06 | 40,45 |
| Poly(N-Vinylcaprolactam) | 15,16 |
| 2-Hydroxy-3-phenoxy-propylacrylat | 39,09 |
| Aerosil^{®} R202 | 3,84 |
| Diisopropylhydroperoxid | 1,26 |
| Tris(2-phenylpyridinato)iridium(III) | 0,20 |
| Summe | 100,00 |

### Beispiel 5, Prozentuale Zusammensetzung der Lösung/ Mischung zur Herstellung des reaktiven Klebstofffilms

| Rohstoffe und Rohstoffzubereitungen inklusive Lösungsmittel | Gewichtsprozent Einwaage |
|---|---|
| 20 gewichtsprozentige IROSTIC^{®} S-6558-06-Lösung | 70,76 |
| 40 gewichtsprozentige Poly(N-Vinylcaprolactam) - Lösung | 13,27 |
| 2-Hydroxy-3-phenoxy-propylacrylat | 13,68 |
| Aerosil^{®} R202 | 1,34 |
| Peroxan^{®} IHP-50 | 0,88 |
| Tris[2-(2,4-difluorophenyl)pyridin]iridium II) | 0,07 |
| | |
| Summe | 100,00 |

### Beispiel 5, Prozentuale Zusammensetzung des reaktiven Klebstofffilms

| Rohstoffe ohne Lösungsmittel | Gewichtsprozent Feststoff |
|---|---|
| IROSTIC^{®} S-6558-06 | 40,45 |
| Poly(N-Vinylcaprolactam) | 15,16 |
| 2-Hydroxy-3-phenoxy-propylacrylat | 39,09 |
| Aerosil^{®} R202 | 3,84 |
| Diisopropylhydroperoxid | 1,26 |
| Tris[2-(2,4-difluorophenyl)pyridine]iridium II) | 0,20 |
| | |
| Summe | 100,00 |

### Beispiel 6, Prozentuale Zusammensetzung der Lösung/ Mischung zur Herstellung des reaktiven Klebstofffilms

| Rohstoffe und Rohstoffzubereitungen inklusive Lösungsmittel | Gewichtsprozent Einwaage |
|---|---|
| 20 gewichtsprozentige IROSTIC^{®} S-6558-06-Lösung | 70,66 |
| 40 gewichtsprozentige Poly(N-Vinylcaprolactam) - Lösung | 13,25 |
| 2-Hydroxy-3-phenoxy-propylacrylat | 13,66 |
| Aerosil^{®} R202 | 1,34 |
| Peroxan^{®} IHP-50 | 0,88 |
| 5 Gew.%ige Tris(2,2'-bipyridyl)ruthenium(II) chlorid hexahydrat-Lösung | 0,21 |
| | |
| Summe | 100,00 |

### Beispiel 6, Prozentuale Zusammensetzung des reaktiven Klebstofffilms

| Rohstoffe ohne Lösungsmittel | Gewichtsprozent Feststoff |
|---|---|
| IROSTIC^{®} S-6558-06 | 40,50 |
| Poly(N-Vinylcaprolactam) | 15,19 |
| 2-Hydroxy-3-phenoxy-propylacrylat | 39,16 |
| Aerosil^{®} R202 | 3,85 |
| Diisopropylhydroperoxid | 1,27 |
| Tris(2,2'-bipyridyl)ruthenium(II) chlorid hexahydrat | 0,03 |
| | |
| Summe | 100,00 |

### Beispiel 7, Prozentuale Zusammensetzung der Lösung/ Mischung zur Herstellung des reaktiven Klebstofffilms

| Rohstoffe und Rohstoffzubereitungen inklusive Lösungsmittel | Gewichtsprozent Einwaage |
|---|---|
| 20 gewichtsprozentige IROSTIC^{®} S-6558-06-Lösung | 70,66 |
| 40 gewichtsprozentige Poly(N-Vinylcaprolactam/Butylacrylat) (50/50)-Lösung | 13,25 |
| 2-Hydroxy-3-phenoxy-propylacrylat | 13,66 |
| Aerosil^{®} R202 | 1,34 |
| Peroxan^{®} IHP-50 | 0,88 |
| 5 Gew.%ige Tris(2,2'-bipyridyl)ruthenium(II) chlorid hexahydrat-Lösung | 0,21 |
| | |
| Summe | 100,00 |

### Beispiel 7, Prozentuale Zusammensetzung des reaktiven Klebstofffilms

| Rohstoffe ohne Lösungsmittel | Gewichtsprozent Feststoff |
|---|---|
| IROSTIC^{®} S-6558-06 | 40,50 |
| Poly(N-Vinylcaprolactam/ Butylacrylat)-Copolymer (50/50) | 15,19 |
| 2-Hydroxy-3-phenoxy-propylacrylat | 39,16 |
| Aerosil^{®} R202 | 3,85 |
| Diisopropylhydroperoxid | 1,27 |
| Tris(2,2'-bipyridyl)ruthenium(II) chlorid hexahydrat | 0,03 |
| | |
| Summe | 100,00 |

### Beispiel 8, Prozentuale Zusammensetzung der Lösung/ Mischung zur Herstellung des reaktiven Klebstofffilms

| Rohstoffe und Rohstoffzubereitungen inklusive Lösungsmittel | Gewichtsprozent Einwaage |
|---|---|
| 20 gewichtsprozentige IROSTIC^{®} S-6558-06-Lösung | 70,66 |
| 40 gewichtsprozentige Poly(N-Vinylcaprolactam/Butylacrylat) (80/20)-Lösung | 13,25 |
| 2-Hydroxy-3-phenoxy-propylacrylat | 13,66 |
| Aerosil^{®} R202 | 1,34 |
| Peroxan^{®} IHP-50 | 0,88 |
| 5 Gew.%ige Tris(2,2'-bipyridyl)ruthenium(II) chlorid hexahydrat-Lösung | 0,21 |
| Summe | 100,00 |

### Beispiel 8, Prozentuale Zusammensetzung des reaktiven Klebstofffilms

| Rohstoffe ohne Lösungsmittel | Gewichtsprozent Feststoff |
|---|---|
| IROSTIC^{®} S-6558-06 | 40,50 |
| Poly(N-Vinylcaprolactam/ Butylacrylat)-Copolymer (80/20) | 15,19 |
| 2-Hydroxy-3-phenoxy-propylacrylat | 39,16 |
| Aerosil^{®} R202 | 3,85 |
| Diisopropylhydroperoxid | 1,27 |
| Tris(2,2'-bipyridyl)ruthenium(II) chlorid hexahydrat | 0,03 |
| Summe | 100,00 |

### Beispiel 9, Prozentuale Zusammensetzung der Lösung/ Mischung zur Herstellung des reaktiven Klebstofffilms

| Rohstoffe und Rohstoffzubereitungen inklusive Lösungsmittel | Gewichtsprozent Einwaage |
|---|---|
| 20 gewichtsprozentige IROSTIC^{®} S-6558-06-Lösung | 76,75 |
| Sokalan^{®} K30P | 5,76 |
| 2-Hydroxy-3-phenoxy-propylacrylat | 14,84 |
| Aerosil^{®} R202 | 1,46 |
| Peroxan^{®} IHP-50 | 0,96 |
| 5 Gew.%ige Tris(2,2'-bipyridyl)ruthenium(II) chlorid hexahydrat-Lösung | 0,23 |
| Summe | 100,00 |

### Beispiel 9, Prozentuale Zusammensetzung des reaktiven Klebstofffilms

| Rohstoffe ohne Lösungsmittel | Gewichtsprozent Feststoff |
|---|---|
| IROSTIC^{®} S-6558-06 | 40,50 |
| Sokalan^{®} K30P | 15,19 |
| 2-Hydroxy-3-phenoxy-propylacrylat | 39,16 |
| Aerosil^{®} R202 | 3,85 |
| Diisopropylhydroperoxid | 1,27 |
| Tris(2,2'-bipyridyl)ruthenium(II) chlorid hexahydrat | 0,03 |
| Summe | 100,00 |

### Beispiel 10, Prozentuale Zusammensetzung der Lösung/ Mischung zur Herstellung des reaktiven Klebstofffilms

| Rohstoffe und Rohstoffzubereitungen inklusive Lösungsmittel | Gewichtsprozent Einwaage |
|---|---|
| 40 gewichtsprozentige AC-1-Lösung | 54,62 |
| 40 gewichtsprozentige Poly(N-Vinylcaprolactam) - Lösung | 20,48 |
| 2-Hydroxy-3-phenoxy-propylacrylat | 21,12 |
| Aerosil^{®} R202 | 2,08 |
| Peroxan^{®} IHP-50 | 1,37 |
| 5 Gew.%ige Tris(2,2'-bipyridyl)ruthenium(II) chlorid hexahydrat-Lösung | 0,33 |
| Summe | 100,00 |

### Beispiel 10, Prozentuale Zusammensetzung des reaktiven Klebstofffilms

| Rohstoffe ohne Lösungsmittel | Gewichtsprozent Feststoff |
|---|---|
| AC-1 | 40,50 |
| Poly(N-Vinylcaprolactam) | 15,19 |
| 2-Hydroxy-3-phenoxy-propylacrylat | 39,16 |
| Aerosil^{®} R202 | 3,85 |
| Diisopropylhydroperoxid | 1,27 |
| Tris(2,2'-bipyridyl)ruthenium(II) chlorid hexahydrat | 0,03 |
| Summe | 100,00 |

### Beispiel 11, Prozentuale Zusammensetzung der Lösung/ Mischung zur Herstellung des reaktiven Klebstofffilms

| Rohstoffe und Rohstoffzubereitungen inklusive Lösungsmittel | Gewichtsprozent Einwaage |
|---|---|
| 20 gewichtsprozentige IROSTIC^{®} S-6558-06-Lösung | 70,65 |
| 40 gewichtsprozentige Poly(N-Vinylcaprolactam) - Lösung | 13,25 |
| 2-Hydroxy-3-phenoxy-propylacrylat | 6,60 |
| 2-Ethylhexylacrylat | 7,07 |
| Aerosil^{®} R202 | 1,34 |
| Peroxan^{®} IHP-50 | 0,88 |
| 5 Gew.%ige Tris(2,2'-bipyridyl)ruthenium(II) chlorid hexahydrat-Lösung | 0,21 |
| | |
| Summe | 100,00 |

### Beispiel 11, Prozentuale Zusammensetzung des reaktiven Klebstofffilms

| Rohstoffe ohne Lösungsmittel | Gewichtsprozent Feststoff |
|---|---|
| IROSTIC^{®} S-6558-06 | 40,50 |
| Poly(N-Vinylcaprolactam) | 15,19 |
| 2-Hydroxy-3-phenoxy-propylacrylat | 18,91 |
| 2-Ethylhexylacrylat | 20,25 |
| Aerosil^{®} R202 | 3,85 |
| Diisopropylhydroperoxid | 1,27 |
| Tris(2,2'-bipyridyl)ruthenium(II) chlorid hexahydrat | 0,03 |
| | |
| Summe | 100,00 |

### Vergleichsbeispiele

### Vergleichsbeispiel 1, Prozentuale Zusammensetzung der Lösung/ Mischung

| Rohstoffe und Rohstoffzubereitungen inklusive Lösungsmittel | Gewichtsprozent Einwaage |
|---|---|
| 20 gewichtsprozentige IROSTIC^{®} S-6558-06-Lösung | 81,44 |
| 2-Hydroxy-3-phenoxy-propylacrylat | 15,75 |
| Aerosil^{®} R202 | 1,55 |
| Peroxan^{®} IHP-50 | 1,02 |
| 5 Gew.%ige Tris(2,2'-bipyridyl)ruthenium(II) chlorid hexahydrat-Lösung | 0,24 |
| | |
| Summe | 100,00 |

### Vergleichsbeispiel 1, Prozentuale Zusammensetzung des Films

| Rohstoffe ohne Lösungsmittel | Gewichtsprozent Feststoff |
|---|---|
| IROSTIC^{®} S-6558-06 | 47,76 |
| 2-Hydroxy-3-phenoxy-propylacrylat | 46,17 |
| Aerosil^{®} R202 | 4,54 |
| Diisopropylhydroperoxid | 1,49 |
| Tris(2,2'-bipyridyl)ruthenium(II) chlorid hexahydrat | 0,04 |
| | |
| Summe | 100,00 |

### Vergleichsbeispiel 2, Prozentuale Zusammensetzung der Lösung/ Mischung

| Rohstoffe und Rohstoffzubereitungen inklusive Lösungsmittel | Gewichtsprozent Einwaage |
|---|---|
| 20 gewichtsprozentige IROSTIC^{®}'S-6558-06-Lösung | 81,44 |
| GENOMER^{®} 1122TF | 15,75 |
| Aerosil^{®} R202 | 1,55 |
| Peroxan^{®} IHP-50 | 1,02 |
| 5 Gew.%ige Tris(2,2'-bipyridyl)ruthenium(II) chlorid hexahydrat-Lösung | 0,24 |
| | |
| Summe | 100,00 |

### Vergleichsbeispiel 2, Prozentuale Zusammensetzung des Films

| Rohstoffe ohne Lösungsmittel | Gewichtsprozent Feststoff |
|---|---|
| IROSTIC^{®} S-6558-06 | 47,76 |
| GENOMER^{®} 1122TF | 46,17 |
| Aerosil^{®} R202 | 4,54 |
| Diisopropylhydroperoxid | 1,49 |
| Tris(2,2'-bipyridyl)ruthenium(II) chlorid hexahydrat | 0,04 |
| | |
| Summe | 100,00 |

### Vergleichsbeispiel 3, Prozentuale Zusammensetzung der Lösung/ Mischung

| Rohstoffe und Rohstoffzubereitungen inklusive Lösungsmittel | Gewichtsprozent Einwaage |
|---|---|
| 20 gewichtsprozentige Desmomelt^{®} 530 -Lösung | 69,94 |
| 4-Acryloylmorpholin | 17,24 |
| N-Vinylcaprolactam | 4,66 |
| Di(trimethylolpropan)tetraacrylat | 1,41 |
| Dynasylan MEMO | 0,48 |
| Peroxan^{®} IHP-50 | 4,66 |
| 5 Gew.%ige Tris(2,2'-bipyridyl)ruthenium(II) chlorid hexahydrat-Lösung | 1,61 |
| | |
| Summe | 100,00 |

### Vergleichsbeispiel 3, Prozentuale Zusammensetzung des Films

| Rohstoffe ohne Lösungsmittel | Gewichtsprozent Feststoff |
|---|---|
| Desmomelt^{®} 530 | 34,80 |
| 4-Acryloylmorpholin | 42,90 |
| N-Vinylcaprolactam | 11,60 |
| Di(trimethylolpropan)tetraacrylat | 3,50 |
| Dynasylan MEMO | 1,20 |
| Diisopropylhydroperoxid | 5,80 |
| Tris(2,2'-bipyridyl)ruthenium(II) chlorid hexahydrat | 0,20 |
| | |
| Summe | 100,00 |

### Vergleichsbeispiel 4, Prozentuale Zusammensetzung der Lösung/ Mischung

| Rohstoffe und Rohstoffzubereitungen inklusive Lösungsmittel | Gewichtsprozent Einwaage |
|---|---|
| 20 gewichtsprozentige Desmomelt^{®} 530 -Lösung | 74,55 |
| 4-Acryloylmorpholin | 3,48 |
| SR^{®} 531 | 14,87 |
| Peroxan^{®} IHP-50 | 4,95 |
| 5 Gew.%ige Tris(2,2'-bipyridyl)ruthenium(II) chlorid hexahydrat-Lösung | 2,15 |
| Summe | 100,00 |

### Vergleichsbeispiel 4, Prozentuale Zusammensetzung des Films

| Rohstoffe ohne Lösungsmittel | Gewichtsprozent Feststoff |
|---|---|
| Desmomelt^{®} 530 | 41,60 |
| 4-Acryloylmorpholin | 9,70 |
| SR^{®} 531 | 41,50 |
| Diisopropylhydroperoxid | 6,90 |
| Tris(2,2'-bipyridyl)ruthenium(II) chlorid hexahydrat | 0,30 |
| Summe | 100,00 |

### Push Out-Test

Der Push-out-Test ermöglicht Aussagen über die Verklebungsfestigkeit eines doppelseitig klebenden Klebeprodukts in Richtung der Klebschichtnormalen.

### Prüfkörper für den Push-Out Test

Es wurden kreisförmige Platten (Ronden) mit einem Durchmesser von 21 mm verwendet. Weiterhin wurden quadratische Lochplatten mit einer Seitenlänge von jeweils 40 mm verwendet. Das Loch ist jeweils zentral in der Mitte angeordnet. Es ist rund, der Lochdurchmesser beträgt jeweils 9 mm. Die verwendeten Ronden waren aus Polycarbonat und aus SUS-Stahl. Die verwendeten quadratischen Lochplatten waren aus Polycarbonat, Polyamid, eloxiertem Aluminium und aus SUS-Stahl.

Im Einzelnen wurden folgende Prüfkörper verwendet:
a) Ronden:
   - Kunststoffscheiben aus Polycarbonat (PC) Makrolon 099 gratfrei gefräst 21x3mm
   - Stahlscheiben, Stahlsorte VA1.4301 (entspricht SUS 304), Außenkontur lasergeschnitten, einseitig spiegelpoliert, 21x2 mm
b) Quadratische Lochplatten:
   - Kunststoffprüfkörper aus Polycarbonat (PC), Fabrikat Makroform 099, 40x40x4 mm, Kunststoffbohrung mittig, D = 9 mm
   - Kunststoffprüfkörper aus Polyamid (PA), glasfaserverstärkt, Fabrikat PA6 Granulat natur, 25 % GF, Ultramid B3 WG5, 40x40x4 mm, Kunststoffbohrung mittig, D = 9 mm
   - Prüfkörper aus Aluminium (Al), Legierung 5005A, AIMg1, eloxiert E6 EV1, 40x40x2 mm, Aluminiumbohrung mittig, D = 9 mm
   - Prüfkörper aus Stahl, Stahlsorte VA1.4301 (entspricht SUS 304), Innen- und Außenkontur lasergeschnitten, Oberflächen spiegelpoliert, 40x40x3 mm, Stahlbohrung mittig, D = 9 mm

Die Kunststoff- und Aluminiumprüfkörper wurden von der Firma Rocholl GmbH (Eschelbronn, Deutschland, https://rocholl.eu/) bezogen. Lieferant der Stahlprüfkörper war die Firma Classen GmbH (Rellingen, Deutschland, www.classen-laser.de/).

### Probenvorbereitung für den Push-Out-Test

Unterschieden wird zwischen den erfindungsgemäßen, einschichtigen, lichthärtenden, reaktiven, haftklebrigen, Klebstofffilmen, die als 100 µm dicke kreisförmige Stanzlinge (Ronden) vorlagen und den erfindungsgemäßen, dreischichtigen, reaktiven Klebebändern, die aus zwei 50 µm dicken, reaktiven Filmen und der mit Trichloressigsäure geätzten, 12 µm dicken Polyesterfolie, angeordnet in der Mitte zwischen den beiden 50 µm dicken, reaktiven Filmen, bestehen und als gestanzte Ringe vorlagen.

Die Trennliner der Stanzlinge wurden jeweils von einer Seite des Stanzlings abgezogen.

Die Stanzlinge wurden jeweils zentral mittig auf eine Prüfkörper-Ronde aufgelegt.

Die Stanzlinge hafteten nun auf den Prüfkörper-Ronden.

Anschließend wurde das noch auf den Stanzlingen verbliebene Trennpapier abgezogen. Die Prüfkörper-Ronden waren somit nun mit den einschichtigen reaktiven Klebstofffilmen (Ronden) sowie mit den dreischichtigen, reaktiven Klebebändern (Ringen) ausgerüstet.

### Bestrahlung für den Push-Out-Test

Die Bestrahlungen erfolgten in einer ersten Versuchsreihe ausschließlich mit UV-LED-Licht (365 nm) und in einer zweiten Versuchsreihe ausschließlich mit einer Blaulicht.LED (460 nm). Die Dosis wurde wie folgt gewählt:
- LED Spot 100 HP IC 365 nm (UV-LED): 25,0 - 28,0 J/cm²
- LED Spot 100 HP IC 460 nm (Blaulicht-LED): 50,0 - 55,0 J/cm²

Gemessen wurde die Dosis des UV-LED-Lichts mit einem EIT UV-Power Puck II (UV-A) von der Firma UVECO (Bruckmühl, Deutschland, www.uveco.de). Die Dosis der Blaucht-LED wurde mit einem UV-Meter und dem Flächensensor VIS F1 (360-550 nm) der Firma Hönle gemessen.

Die Zeitspanne zwischen dem Ende des Bestrahlens und dem Fügen der Prüfkörper betrug stets zwischen ein und zwei Minuten. Es wurde mehrfach kontrolliert und festgestellt, dass auch Zeitabstände von mindestens 5 Minuten oder mehr möglich sind, ohne dass sich die Verklebungsfestigkeiten verschlechtern.

### Verklebung für den Push-Out-Test

Die mit den bestrahlten Stanzlingen ausgerüsteten Prüfkörper-Ronden wurden mit der jeweils offen liegenden Seite der Stanzlinge derart auf der Lochplatte positioniert, dass der Mittelpunkt der Ronde und der Mittelpunkt des Lochs der Lochplatte übereinander lagen. Anschließend wurde der durch die Haftklebrigkeit der Stanzlinge zusammengehaltene Verbund aus quadratischer Lochplatte, bestrahltem Stanzling und der Prüfkörper-Ronde mit einer Presse der Firma Howe Elektrotechnik e.K. (Glinde, Deutschland, https://howe-hamburg.de/) verpresst. Die Pressparameter waren: 3 bar, 30 Sekunden.

Nach dem Verpressen wurde der Verbund 24 Stunden bei 23 °C und 50 % relativer Luftfeuchtigkeit (r.F.) gelagert. Dabei kam es zu einer allmählich voranschreitenden Härtungsreaktion innerhalb der Stanzlinge und zu einer sich allmählich verstärkenden Haftung zwischen den Stanzlingen und den Prüfkörpern. Es kam somit zu einer Verklebung mit einer allmählichen Festigkeitszunahme über die Zeit. Sodann erfolgten die Push-Out-Tests (Frischwerte).

Weitere entsprechende Klebverbunde wurden nach 24 Stunden Härtungszeit in einer handelsüblichen Klimakammer 3 Tage (d) bei 60 °C und 95 % relativer Luftfeuchtigkeit eingelagert. Im Anschluss wurden die Klebverbunde 1 Stunde bei 23 °C und 50 % relativer Luftfeuchtigkeit gelagert (rekonditioniert). Sodann erfolgten die Push-Out-Tests zur Beurteilung der Feuchtwärmebeständigkeit der Verklebungen.

Zur Beurteilung der Lagerstabilität wurden beidseitig mit Trennlinern abgedeckte, nicht bestrahlte und nicht verklebte Stanzlinge ein halbes Jahr bei 23 °C und 50 % relativer Luftfeuchtigkeit im Dunkeln gelagert. Sodann wurden die Stanzlinge wie oben beschrieben bestrahlt und verklebt. Im Anschluss erfolgten die Push-Out Tests.

Weitere beidseitig mit Trennlinern abgedeckte, nicht bestrahlte und nicht verklebte Stanzlinge, die ein halbes Jahr Lagerzeit bei 23 °C und 50 % relativer Luftfeuchtigkeit im Dunkeln hinter sich hatten, wurden ebenfalls wie oben beschrieben bestrahlt und verklebt. Nach 24 Stunden Härtungszeit wurden die Klebverbunde in einer handelsüblichen Klimakammer 3 Tage bei 60 °C und 95 % relativer Luftfeuchtigkeit eingelagert. Im Anschluss wurden die Klebverbunde 1 Stunde bei 23°C und 50 % relativer Luftfeuchtigkeit gelagert (rekonditioniert). Sodann erfolgten die Push-Out-Tests zur Beurteilung der Feuchtwärmebeständigkeit der Verklebungen der ein halbes Jahr alten Stanzlinge.

Zusammengefasst wurden folgende Kombinationen von Lagerungen und Feuchtwärme-Behandlungen durchgeführt:

| Bezeichnung in den Push-Out-Ergebnis-Tabellen der Beispiele und Vergleichsbeispiele | Lagerzeiten und - konditionen der nicht verklebten Stanzlinge | Feuchtwärmebehandlung der Klebverbunde |
|---|---|---|
| 14 d Normklima | 14 Tage/ 23 °C/ 50 % r. F. | keine |
| 14 d Normklima // 3 d 60 °C / 95 % r.F. | 14 Tage/ 23 °C/ 50 % r. F. | 3 Tage/ 60 °C/ 95 % r. F. |
| ½ Jahr Normklima | ½ Jahr/ 23 °C/ 50 % r. F. | keine |
| ½ Jahr Normklima // 3d 60 °C / 95 % r.F. | ½ Jahr/ 23 °C / 50 % r. F. | 3 Tage/ 60 °C/ 95 % r. F. |

Die Prüfkörper wurden in folgenden Kombinationen verklebt:
- PC-Ronde gegen PC-Platte
- PC-Ronde gegen PA-Platte
- PC-Ronde gegen Al-Platte
- Stahl-Ronde gegen Stahl-Platte

Die Verklebungsflächen waren:
- Kreisförmige Stanzlinge (Ronden): 283 mm² (unter Beachtung des 9 mm-Lochs der Platten)
- Ringförmige Stanzlinge: 122 mm²

### Durchführung des Push Out-Tests

Es wurde mittels eines in eine Zugprüfmaschine gespannten Dorns durch das Loch in der Lochplatte mit einer konstanten Geschwindigkeit von 10 mm/min senkrecht auf die Prüfköper-Ronde gedrückt (also parallel zum Normalenvektor auf die Prüfkörper-Ebene; mittig auf die Lochmitte zentriert), bis die Verklebung sich soweit löste, dass ein Druckabfall von 50 % registriert wurde. Der unmittelbar vor dem Druckabfall einwirkende Druck ist der Maximaldruck Pₘₐₓ. Dieser Wert entspricht dem in der Tabelle angegeben Push Out-Wert [MPa]. Alle Messungen wurden in einem klimatisierten Raum bei 23 °C und 50 % relativer Luftfeuchte (r.F.) durchgeführt.

### Push-Out-Ergebnisse

### Für alle Beispiele:

Jeweils Mittelwerte aus 3 Einzelbestimmungen mit Standardabweichung.

### Bruchbilder:

A = Adhäsiv
K = Kohäsiv
M = Mischbruch

### Beispiel 1

| | Einschichtprodukt (Ronde), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 6,2 ± 0,5 (K) | 4,3 ± 0,6 (M) | 5,7 ± 0,6 (K) | 6,4 ± 0,7 (K) |
| 14 d Normklima//3d 60°C/95% r.F. | 5,5 ± 0,6 (K) | 3,8 ± 0,6 (M) | 4,6 ± 0,7 (M) | 6,0 ± 0,8 (K) |
| ½ Jahr Normklima | 2,2 ± 0,8 (A) | 1,5 ± 0,8 (A) | 2,1 ± 0,7 (A) | 2,8 ± 0,9 (M) |
| ½ Jahr Normklima//3d 60°C/95% r.F. | 1,8 ± 0,6 (A) | 1,4 ± 0,5 (A) | 2,0 ± 0,6 (A) | 2,4 ± 0,7 (A) |

| | Einschichtprodukt (Ronde), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 5,9 ± 0,6 (K) | 4,3 ± 0,6 (M) | 6,1 ± 0,8 (K) | 6,0 ± 0,7 (K) |
| 14 d Normklima//3d 60°C/95% r.F. | 5,0 ± 0,7 (K) | 3,5 ± 0,7 (M) | 5,4 ± 0,9 (M) | 5,9 ± 0,7 (K) |
| ½ Jahr Normklima | 2,1 ± 0,8 (M) | 1,0 ± 0,8 (A) | 2,2 ± 0,7 (A) | 3,1 ± 0,9 (M) |
| ½ Jahr Normklima//3d 60°C/95% r.F. | 1,7 ± 0,7 (A) | 0,8 ± 0,6 (A) | 1,9 ± 0,8 (A) | 2,7 ± 0,7 (A) |

| | Dreischichtprodukt (Ring), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 7,0 ± 0,5 (K) | 4,6 ± 0,7 (M) | 5,8 ± 0,8 (K) | 6,2 ± 0,7 (K) |
| 14 d Normklima//3d 60°C/95% r.F. | 6,3 ± 0,7 (K) | 4,0 ± 0,6 (K) | 5,3 ± 0,7 (K) | 5,5 ± 0,8 (K) |
| ½ Jahr Normklima | 2,6 ± 0,6 (M) | 1,4 ± 0,7 (A) | 2,1 ± 0,7 (A) | 3,1 ± 0,8 (M) |
| ½ Jahr Normklima//3d 60°C/95% r.F. | 2,4 ± 0,7 (A) | 1,7 ± 0,7 (A) | 1,9 ± 0,9 (A) | 2,8 ± 0,7 (A) |

| | Dreischichtprodukt (Ring), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 7,1 ± 0,4 (K) | 4,8 ± 0,6 (K) | 6,6 ± 0,7 (K) | 7,2 ± 0,5 (K) |
| 14 d Normklima//3d 60°C/95% r.F. | 6,8 ± 0,5 (K) | 4,4 ± 0,7 (K) | 6,1 ± 0,4 (K) | 7,1 ± 0,5 (K) |
| ½ Jahr Normklima | 2,4 ± 0,7 (M) | 1,9 ± 0,9 (A) | 2,5 ± 0,6 (A) | 3,6 ± 0,8 (M) |
| ½ Jahr Normklima//3d 60°C/95% r.F. | 2,1 ± 0,5 (M) | 2,2 ± 0,5 (A) | 2,4 ± 0,7 (A) | 3,1 ± 0,8 (M) |

### Beispiel 2

| | Einschichtprodukt (Ronde), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 5,6 ± 0,4 (K) | 4,1 ± 0,6 (M) | 4,1 ± 0,5 (M) | 4,9 ± 0,4 (K) |
| 14 d Normklima//3d 60°C/95% r.F. | 5,2 ± 0,7 (K) | 3,8 ± 0,8 (A) | 3,6 ± 0,6 (M) | 4,7 ± 0,8 (K) |
| ½ Jahr Normklima | 5,2 ± 0,6 (K) | 3,7 ± 0,5 (M) | 4,0 ± 0,4 (M) | 5,2 ± 0,8 (K) |
| ½ Jahr Normklima//3d 60°C/95% r.F. | 5,1 ± 0,7 (K) | 3,2 ± 0,7 (A) | 3,7 ± 0,8 (M) | 4,5 ± 0,7 (K) |

| | Einschichtprodukt (Ronde), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 5,6 ± 0,5 (K) | 4,0 ± 0,7 (M) | 4,3 ± 0,7 (M) | 5,1 ± 0,5 (K) |
| 14 d Normklima//3d 60°C/95% r.F. | 5,1 ± 0,5 (K) | 3,4 ± 0,6 (A) | 3,8 ± 0,7 (M) | 4,7 ± 0,6 (K) |
| ½ Jahr Normklima | 5,0 ± 0,6 (K) | 3,6 ± 0,6 (M) | 4,1 ± 0,4 (M) | 4,6 ± 0,6 (K) |
| ½ Jahr Normklima//3d 60°C/95% r.F. | 4,9 ± 0,6 (K) | 3,2 ± 0,6 (M) | 3,8 ± 0,6 (M) | 4,6 ± 0,5 (K) |

| | Dreischichtprodukt (Ring), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 6,1 ± 0,5 (K) | 4,5 ± 0,4 (M) | 4,9 ± 0,4 (M) | 5,7 ± 0,5 (K) |
| 14 d Normklima//3d 60°C/95% r.F. | 5,8 ± 0,5 (K) | 4,2 ± 0,4 (A) | 4,5 ± 0,6 (A) | 5,0 ± 0,6 (K) |
| ½ Jahr Normklima | 5,5 ± 0,6 (K) | 4,0 ± 0,6 (A) | 4,4 ± 0,5 (A) | 5,6 ± 0,7 (K) |
| ½ Jahr Normklima//3d 60°C/95% r.F. | 5,4 ± 0,6 (K) | 4,1 ± 0,5 (A) | 4,1 ± 0,7 (M) | 4,8 ± 0,5 (K) |

| | Dreischichtprodukt (Ring), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 6,2 ± 0,4 (K) | 4,3 ± 0,6 (M) | 4,8 ± 0,5 (M) | 5,4 ± 0,4 (K) |
| 14 d Normklima//3d 60°C/95% r.F. | 6,3 ± 0,3 (K) | 4,0 ± 0,5 (A) | 4,2 ± 0,5 (A) | 5,7 ± 0,5 (K) |
| ½ Jahr Normklima | 5,8 ± 0,5 (K) | 4,3 ± 0,7 (M) | 4,1 ± 0,5 (M) | 5,1 ± 0,7 (K) |
| ½ Jahr Normklima//3d 60°C/95% r.F. | 5,4 ± 0,5 (K) | 3,6 ± 0,9 (M) | 3,9 ± 0,8 (M) | 5,5 ± 0,6 (K) |

### Beispiel 3

| | Einschichtprodukt (Ronde), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 4,0 ± 0,4 (K) | 2,6 ± 0,5 (M) | 2,6 ± 0,6 (M) | 3,3 ± 0,7 (K) |
| 14 d Normklima//3d 60°C/95% r.F. | 5,8 ± 0,4 (K) | 2,5 ± 0,5 (A) | 3,0 ± 0,5 (M) | 4,0 ± 0,7 (K) |
| ½ Jahr Normklima | 4,3 ± 0,6 (K) | 2,6 ± 0,7 (M) | 2,1 ± 0,5 (M) | 3,0 ± 0,5 (K) |
| ½ Jahr Normklima//3d 60°C/95% r.F. | 4,1 ± 0,5 (K) | 2,8 ± 0,8 (A) | 2,5 ± 0,4 (A) | 2,9 ± 0,9 (K) |

| | Einschichtprodukt (Ronde), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 4,2 ± 0,4 (K) | 2,8 ± 0,5 (M) | 2,8 ± 0,5 (M) | 3,6 ± 0,8 (K) |
| 14 d Normklima//3d 60°C/95% r.F. | 5,4 ± 0,5 (K) | 3,1 ± 0,5 (M) | 2,8 ± 0,5 (M) | 3,7 ± 0,6 (K) |
| ½ Jahr Normklima | 3,9 ± 0,3 (K) | 2,7 ± 0,6 (M) | 2,7 ± 0,7 (M) | 3,0 ± 0,6 (K) |
| ½ Jahr Normklima//3d 60°C/95% r.F. | 3,7 ± 0,9 (K) | 2,4 ± 0,6 (A) | 2,2 ± 0,7 (A) | 2,8 ± 0,5 (M) |

| | Dreischichtprodukt (Ring), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 4,6 ± 0,4 (K) | 2,8 ± 0,3 (M) | 2,2 ± 0,6 (M) | 3,9 ± 0,5 (K) |
| 14 d Normklima//3d 60°C/95% r.F. | 5,8 ± 0,4 (K) | 3,3 ± 0,6 (M) | 3,2 ± 0,5 (M) | 4,3 ± 0,6 (K) |
| ½ Jahr Normklima | 4,0 ± 0,3 (K) | 2,9 ± 0,6 (M) | 2,6 ± 0,4 (M) | 3,5 ± 0,6 (K) |
| ½ Jahr Normklima//3d 60°C/95% r.F. | 3,9 ± 0,5 (K) | 2,6 ± 0,5 (A) | 2,4 ± 0,6 (A) | 3,7 ± 0,6 (K) |

| | Dreischichtprodukt (Ring), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 4,4 ± 0,5 (K) | 3,0 ± 0,4 (M) | 2,9 ± 0,5 (M) | 3,8 ± 0,6 (K) |
| 14 d Normklima//3d 60°C/95% r.F. | 5,7 ± 0,3 (K) | 3,2 ± 0,6 (M) | 3,2 ± 0,6 (M) | 4,1 ± 0,7 (K) |
| ½ Jahr Normklima | 4,3 ± 0,4 (K) | 2,9 ± 0,5 (M) | 2,7 ± 0,6 (M) | 3,3 ± 0,6 (K) |
| ½ Jahr Normklima//3d 60°C/95% r.F. | 4,0 ± 0,8 (M) | 2,8 ± 0,4 (A) | 2,9 ± 0,5 (A) | 3,6 ± 0,8 (K) |

### Beispiel 4

| | Einschichtprodukt (Ronde), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 3,4 ± 0,4 (A) | 2,1 ± 0,3 (A) | 2,9 ± 0,5 (A) | 1,9 ± 0,8 (A) |
| 14 d Normklima//3d 60°C/95% r.F. | 3,3 ± 0,3 (A) | 1,9 ± 0,4 (A) | 2,6 ± 0,4 (A) | 1,6 ± 0,6 (A) |
| ½ Jahr Normklima | 3,1 ± 0,5 (K) | 2,0 ± 0,3 (A) | 2,6 ± 0,4 (K) | 1,6 ± 0,4 (M) |
| ½ Jahr Normklima//3d 60°C/95% r.F. | 3,0 ± 0,7 (M) | 1,7 ± 0,5 (A) | 2,7 ± 0,3 (M) | 1,8 ± 0,6 (A) |

| | Einschichtprodukt (Ronde), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 3,3 ± 0,5 (A) | 1,9 ± 0,3 (A) | 2,6 ± 0,4 (A) | 1,6 ± 0,7 (A) |
| 14 d Normklima//3d 60°C/95% r.F. | 3,0 ± 0,5 (A) | 1,7 ± 0,4 (A) | 2,2 ± 0,5 (A) | 1,5 ± 0,7 (A) |
| ½ Jahr Normklima | 3,0 ± 0,3 (M) | 1,7 ± 0,4 (A) | 2,4 ± 0,5 (M) | 1,3 ± 0,5 (M) |
| ½ Jahr Normklima//3d 60°C/95% r.F. | 3,3 ± 0,3 (M) | 1,5 ± 0,5 (A) | 2,4 ± 0,8 (A) | 1,1 ± 0,5 (A) |

| | Dreischichtprodukt (Ring), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 3,7 ± 0,5 (A) | 2,5 ± 0,4 (A) | 2,8 ± 0,6 (A) | 2,4 ± 0,8 (A) |
| 14 d Normklima//3d 60°C/95% r.F. | 3,5 ± 0,5 (A) | 2,3 ± 0,3 (A) | 2,7 ± 0,3 (A) | 1,8 ± 0,5 (A) |
| ½ Jahr Normklima | 3,6 ± 0,6 (M) | 2,4 ± 0,2 (A) | 2,7 ± 0,2 (M) | 1,9 ± 0,7 (M) |
| ½ Jahr Normklima//3d 60°C/95% r.F. | 3,1 ± 0,8 (M) | 2,4 ± 0,9 (A) | 2,3 ± 0,4 (A) | 1,6 ± 0,6 (A) |

| | Dreischichtprodukt (Ring), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 3,5 ± 0,6 (A) | 2,4 ± 0,5 (A) | 2,4 ± 0,5 (A) | 2,6 ± 0,6 (A) |
| 14 d Normklima//3d 60°C/95% r.F. | 3,3 ± 0,6 (A) | 2,2 ± 0,6 (A) | 2,0 ± 0,4 (A) | 2,4 ± 0,4 (A) |
| ½ Jahr Normklima | 3,1 ± 0,4 (M) | 2,2 ± 0,5 (A) | 2,0 ± 0,3 (M) | 1,8 ± 0,6 (A) |
| ½ Jahr Normklima//3d 60°C/95% r.F. | 3,4 ± 0,5 (M) | 2,6 ± 0,5 (A) | 1,9 ± 0,8 (A) | 2,1 ± 0,7 (A) |

### Beispiel 5

| | Einschichtprodukt (Ronde), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 2,2 ± 0,5 (A) | 1,8 ± 0,5 (A) | 1,7 ± 0,4 (A) | 1,6 ± 0,6 (A) |
| 14 d Normklima//3d 60°C/95% r.F. | 1,9 ± 0,3 (A) | 1,5 ± 0,5 (A) | 1,4 ± 0,5 (A) | 1,4 ± 0,6 (A) |
| ½ Jahr Normklima | 1,8 ± 0,3 (A) | 1,6 ± 0,4 (A) | 1,6 ± 0,5 (A) | 1,3 ± 0,4 (A) |
| ½ Jahr Normklima//3d 60°C/95% r.F. | 1,7 ± 0,6 (A) | 1,6 ± 0,6 (A) | 1,3 ± 0,4 (A) | 1,5 ± 0,7 (A) |

| | Einschichtprodukt (Ronde), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 2,0 ± 0,4 (A) | 1,9 ± 0,4 (A) | 1,4 ± 0,4 (A) | 1,6 ± 0,7 (A) |
| 14 d Normklima//3d 60°C/95% r.F. | 1,8 ± 0,4 (A) | 1,6 ± 0,3 (A) | 1,5 ± 0,6 (A) | 1,5 ± 0,4 (A) |
| ½ Jahr Normklima | 1,9 ± 0,5 (M) | 1,9 ± 0,6 (A) | 1,3 ± 0,5 (A) | 1,4 ± 0,6 (A) |
| ½ Jahr Normklima // 3d 60°C/95% r.F. | 1,8 ± 0,8 (M) | 1,8 ± 0,5 (A) | 1,4 ± 0,5 (A) | 1,6 ± 0,6 (A) |

| | Dreischichtprodukt (Ring), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 2,5 ± 0,4 (A) | 2,0 ± 0,5 (A) | 1,9 ± 0,4 (A) | 2,0 ± 0,7 (A) |
| 14 d Normklima // 3d 60°C/95% r.F. | 2,3 ± 0,4 (A) | 1,9 ± 0,4 (A) | 1,9 ± 0,4 (A) | 1,5 ± 0,7 (A) |
| ½ Jahr Normklima | 2,0 ± 0,5 (M) | 1,9 ± 0,3 (A) | 1,5 ± 0,5 (A) | 1,4 ± 0,6 (A) |
| ½ Jahr Normklima // 3d 60°C/95% r.F. | 2,2 ± 0,4 (M) | 2,2 ± 0,7 (A) | 1,8 ± 0,7 (A) | 1,8 ± 0,6 (A) |

| | Dreischichtprodukt (Ring), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 2,3 ± 0,4 (A) | 1,9 ± 0,3 (A) | 1,8 ± 0,5 (A) | 1,9 ± 0,5 (A) |
| 14 d Normklima // 3d 60°C/95% r.F. | 2,1 ± 0,5 (A) | 1,6 ± 0,5 (A) | 1,5 ± 0,3 (A) | 1,5 ± 0,7 (A) |
| ½ Jahr Normklima | 1,9 ± 0,3 (M) | 1,8 ± 0,6 (A) | 1,7 ± 0,4 (A) | 1,8 ± 0,8 (A) |
| ½ Jahr Normklima // 3d 60°C/95% r.F. | 1,8 ± 0,6 (M) | 1,6 ± 0,6 (A) | 1,7 ± 0,7 (A) | 1,6 ± 0,6 (A) |

### Beispiel 6

| | Einschichtprodukt (Ronde), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 6,9 ± 0,5 (K) | 5,1 ± 0,6 (K) | 7,2 ± 0,5 (K) | 7,3 ± 0,5 (K) |
| 14 d Normklima//3d 60°C/95% r.F. | 6,0 ± 0,4 (K) | 6,5 ± 0,4 (K) | 6,3 ± 0,7 (K) | 7,9 ± 0,6 (K) |
| ½ Jahr Normklima | 6,6 ± 0,6 (K) | 5,2 ± 0,6 (K) | 7,0 ± 0,7 (K) | 6,9 ± 0,6 (K) |
| ½ Jahr Normklima//3d 60°C/95% r.F. | 6,3 ± 0,7 (K) | 6,0 ± 0,5 (K) | 6,5 ± 0,8 (K) | 7,0 ± 0,7 (K) |

| | Einschichtprodukt (Ronde), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 7,5 ± 0,4 (K) | 5,5 ± 0,5 (K) | 7,0 ± 0,5 (K) | 7,7 ± 0,4 (K) |
| 14 d Normklima//3d 60°C/95% r.F. | 6,6 ± 0,6 (K) | 6,0 ± 0,3 (K) | 6,8 ± 0,5 (K) | 8,5 ± 0,5 (K) |
| ½ Jahr Normklima | 6,9 ± 0,6 (K) | 5,3 ± 0,5 (K) | 6,8 ± 0,7 (K) | 7,9 ± 0,5 (K) |
| ½ Jahr Normklima//3d 60°C/95% r.F. | 6,1 ± 0,4 (K) | 6,2 ± 0,5 (K) | 6,5 ± 0,4 (K) | 8,4 ± 0,7 (K) |

| | Dreischichtprodukt (Ring), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 8,0 ± 0,5 (K) | 5,8 ± 0,3 (K) | 7,6 ± 0,3 (K) | 7,9 ± 0,3 (K) |
| 14 d Normklima//3d 60°C/95% r.F. | 6,9 ± 0,5 (K) | 6,1 ± 0,5 (K) | 6,5 ± 0,2 (K) | 8,3 ± 0,7 (K) |
| ½ Jahr Normklima | 7,7 ± 0,5 (K) | 5,9 ± 0,4 (K) | 7,1 ± 0,5 (K) | 7,3 ± 0,4 (K) |
| ½ Jahr Normklima//3d 60°C/95% r.F. | 7,3 ± 0,7 (K) | 6,0 ± 0,6 (K) | 6,3 ± 0,5 (K) | 7,9 ± 0,8 (K) |

| | Dreischichtprodukt (Ring), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 8,3 ± 0,5 (K) | 5,9 ± 0,3 (K) | 7,6 ± 0,3 (K) | 8,4 ± 0,3 (K) |
| 14 d Normklima // 3d 60°C/95% r.F. | 7,0 ± 0,6 (K) | 6,5 ± 0,4 (K) | 6,6 ± 0,3 (K) | 9,1 ± 0,4 (K) |
| ½ Jahr Normklima | 8,1 ± 0,4 (K) | 5,8 ± 0,4 (K) | 7,0 ± 0,3 (K) | 8,7 ± 0,4 (K) |
| ½ Jahr Normklima//3d 60°C/95% r.F. | 7,6 ± 0,5 (K) | 6,2 ± 0,5 (K) | 6,2 ± 0,7 (K) | 8,9 ± 0,6 (K) |

### Beispiel 7

| | Einschichtprodukt (Ronde), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 2,6 ± 0,3 (M) | 2,4 ± 0,4 (M) | 2,6 ± 0,4 (M) | 2,9 ± 0,6 (M) |
| 14 d Normklima // 3d 60°C/95% r.F. | 1,9 ± 0,2 (A) | 1,8 ± 0,2 (A) | 1,9 ± 0,5 (A) | 2,1 ± 0,3 (A) |
| ½ Jahr Normklima | 2,2 ± 0,5 (M) | 2,4 ± 0,4 (M) | 2,4 ± 0,3 (M) | 2,5 ± 0,3 (M) |
| ½ Jahr Normklima // 3d 60°C/95% r. F. | 2,1 ± 0,5 (M) | 1,9 ± 0,3 (A) | 2,0 ± 0,4 (A) | 2,3 ± 0,4 (M) |

| | Einschichtprodukt (Ronde), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 2,8 ± 0,2 (M) | 2,4 ± 0,5 (M) | 2,9 ± 0,3 (M) | 3,4 ± 0,5 (K) |
| 14 d Normklima // 3d 60°C/95% r.F. | 2,0 ± 0,3 (A) | 1,7 ± 0,4 (A) | 2,1 ± 0,3 (A) | 2,5 ± 0,4 (A) |
| ½ Jahr Normklima | 2,6 ± 0,4 (M) | 2,4 ± 0,3 (M) | 2,6 ± 0,5 (M) | 2,9 ± 0,2 (K) |
| ½ Jahr Normklima // 3d 60°C/95% r. F. | 2,4 ± 0,5 (M) | 1,9 ± 0,6 (A) | 2,1 ± 0,5 (A) | 2,3 ± 0,7 (M) |

| | Dreischichtprodukt (Ring), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 3,4 ± 0,2 (K) | 2,6 ± 0,5 (M) | 2,5 ± 0,3 (M) | 3,1 ± 0,5 (M) |
| 14 d Normklima // 3d 60°C/95% r.F. | 2,5 ± 0,3 (A) | 1,9 ± 0,4 (A) | 1,9 ± 0,4 (A) | 2,4 ± 0,4 (A) |
| ½ Jahr Normklima | 3,2 ± 0,6 (M) | 2,4 ± 0,3 (A) | 2,2 ± 0,3 (M) | 3,0 ± 0,6 (M) |
| ½ Jahr Normklima // 3d 60°C/95% r.F. | 2,9 ± 0,5 (M) | 2,0 ± 0,5 (A) | 1,8 ± 0,3 (A) | 2,7 ± 0,8 (M) |

| | Dreischichtprodukt (Ring), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 3,2 ± 0,3 (K) | 2,2 ± 0,3 (M) | 2,6 ± 0,5 (M) | 3,4 ± 0,4 (M) |
| 14 d Normklima // 3d 60°C/95% r.F. | 2,5 ± 0,5 (A) | 1,7 ± 0,4 (A) | 2,1 ± 0,5 (A) | 2,6 ± 0,5 (M) |
| ½ Jahr Normklima | 3,5 ± 0,6 (M) | 2,4 ± 0,3 (M) | 2,1 ± 0,3 (M) | 2,8 ± 0,6 (M) |
| ½ Jahr Normklima // 3d 60°C/95% r.F. | 3,3 ± 0,6 (M) | 2,1 ± 0,3 (A) | 2,2 ± 0,6 (A) | 2,9 ± 0,8 (M) |

### Beispiel 8

| | Einschichtprodukt (Ronde), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 6,1 ± 0,4 (K) | 3,9 ± 0,5 (M) | 3,5 ± 0,4 (M) | 4,8 ± 0,5 (K) |
| 14 d Normklima // 3d 60°C/95% r.F. | 5,2 ± 0,6 (M) | 3,3 ± 0,4 (A) | 2,7 ± 0,6 (A) | 4,0 ± 0,4 (M) |
| ½ Jahr Normklima | 5,9 ± 0,2 (K) | 4,0 ± 0,4 (M) | 3,3 ± 0,4 (K) | 4,6 ± 0,3 (K) |
| ½ Jahr Normklima + 3d 60°C/95% r.F. | 5,3 ± 0,7 (M) | 3,6 ± 0,8 (A) | 3,0 ± 0,9 (A) | 3,6 ± 0,8 (M) |

| | Einschichtprodukt (Ronde), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 6,0 ± 0,2 (K) | 3,6 ± 0,3 (M) | 3,9 ± 0,5 (M) | 4,7 ± 0,5 (K) |
| 14 d Normklima // 3d 60°C/95% r.F. | 5,2 ± 0,5 (K) | 3,2 ± 0,4 (A) | 3,1 ± 0,4 (A) | 4,3 ± 0,5 (K) |
| ½ Jahr Normklima | 5,5 ± 0,4 (K) | 3,2 ± 0,6 (M) | 3,5 ± 0,3 (M) | 4,2 ± 0,4 (K) |
| ½ Jahr Normklima // 3d 60°C/95% r.F. | 4,6 ± 0,8 (K) | 3,0 ± 0,5 (A) | 3,3 ± 0,4 (M) | 4,0 ± 0,7 (K) |

| | Dreischichtprodukt (Ring), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 6,6 ± 0,3 (K) | 4,5 ± 0,3 (M) | 4,0 ± 0,3 (M) | 5,0 ± 0,5 (K) |
| 14 d Normklima // 3d 60°C/95% r.F. | 5,4 ± 0,5 (K) | 3,8 ± 0,6 (A) | 3,4 ± 0,7 (A) | 4,3 ± 0,5 (K) |
| ½ Jahr Normklima | 5,9 ± 0,3 (K) | 4,2 ± 0,5 (M) | 4,3 ± 0,6 (M) | 5,2 ± 0,6 (K) |
| ½ Jahr Normklima // 3d 60°C/95% r.F. | 5,1 ± 0,6 (K) | 3,9 ± 0,6 (A) | 4,0 ± 0,6 (M) | 4,8 ± 0,4 (K) |

| | Dreischichtprodukt (Ring), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 6,3 ± 0,4 (K) | 3,9 ± 0,4 (M) | 4,3 ± 0,3 (M) | 5,6 ± 0,3 (K) |
| 14 d Normklima//3d 60°C/95% r.F. | 5,5 ± 0,3 (K) | 3,0 ± 0,6 (A) | 3,3 ± 0,6 (A) | 4,9 ± 0,3 (K) |
| ½ Jahr Normklima | 5,8 ± 0,5 (M) | 3,3 ± 0,4 (M) | 3,9 ± 0,4 (M) | 5,0 ± 0,7 (K) |
| ½ Jahr Normklima//3d 60°C/95% r.F. | 5,6 ± 0,9 (K) | 3,2 ± 0,5 (A) | 3,5 ± 0,7 (A) | 4,8 ± 0,9 (K) |

### Beispiel 9

| | Einschichtprodukt (Ronde), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 8,5 ± 0,9 (K) | 3,5 ± 1,5 (K) | 5,0 ± 0,9 (K) | 7,7 ± 0,5 (K) |
| 14 d Normklima//3d 60°C/95% r.F. | 7,0 ± 1,3 (K) | 2,9 ± 1,5 (K) | 5,2 ± 1,1 (K) | 7,9 ± 0,8 (K) |
| ½ Jahr Normklima | 7,9 ± 1,2 (K) | 3,0 ± 1,8 (K) | 5,3 ± 0,7 (K) | 8,1 ± 0,7 (K) |
| ½ Jahr Normklima//3d 60°C/95% r.F. | 7,2 ± 1,0 (K) | 2,7 ± 1,1 (K) | 5,0 ± 1,2 (K) | 7,4 ± 0,9 (K) |

| | Einschichtprodukt (Ronde), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 8,9 ± 0,8 (K) | 3,7 ± 1,6 (K) | 5,3 ± 0,7 (K) | 8,7 ± 0,4 (K) |
| 14 d Normklima // 3d 60°C/95% r.F. | 7,2 ± 1,0 (K) | 3,1 ±1,8 (K) | 5,7 ± 1,0 (K) | 8,5 ± 0,5 (K) |
| ½ Jahr Normklima | 7,8 ± 1,1 (K) | 3,5 ± 1,9 (K) | 5,5 ± 0,8 (K) | 8,0 ± 0,7 (K) |
| ½ Jahr Normklima // 3d 60°C/95% r. F. | 7,4 ± 0,8 (K) | 3,3 ±1,3 (K) | 5,8 ± 1,5 (K) | 8,4 ± 0,8 (K) |

| | Dreischichtprodukt (Ring), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 10,1 ± 1,3 (K) | 3,7 ± 1,8 (K) | 7,2 ± 1,1 (K) | 8,5 ± 0,7 (K) |
| 14 d Normklima//3d 60°C/95% r.F. | 9,1 ± 1,5 (K) | 4,0 ± 1,3 (K) | 6,9 ± 1,4 (K) | 8,5 ± 0,9 (K) |
| ½ Jahr Normklima | 9,2 ± 1,5 (K) | 3,1 ± 2,0 (K) | 6,4 ± 0,7 (K) | 8,0 ± 0,5 (K) |
| ½ Jahr Normklima//3d 60°C/95% r.F. | 8,3 ± 1,0 (K) | 3,4 ± 0,8 (K) | 6,0 ± 1,1 (K) | 7,6 ± 1,4 (K) |

| | Dreischichtprodukt (Ring), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 10,5 ± 1,0 (K) | 4,0 ± 2,0 (K) | 6,0 ± 1,0 (K) | 9,0 ± 0,5 (K) |
| 14 d Normklima//3d 60°C/95% r.F. | 8,4 ± 1,2 (K) | 5,1 ± 2,3 (K) | 5,8 ± 1,1 (K) | 8,1 ± 0,6 (K) |
| ½ Jahr Normklima | 9,9 ± 1,3 (K) | 3,8 ± 2,4 (K) | 5,7 ± 0,8 (K) | 8,8 ± 0,4 (K) |
| ½ Jahr Normklima//3d 60°C/95% r.F. | 9,1 ± 1,0 (K) | 4,2 ± 0,8 (K) | 5,3 ± 1,4 (K) | 8,4 ± 0,9 (K) |

### Beispiel 10

| | Einschichtprodukt (Ronde), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 2,2 ± 0,6 (M) | 3,7 ± 0,8 (M) | 2,9 ± 0,6 (M) | 6,7 ± 0,9 (K) |
| 14 d Normklima // 3d 60°C/95% r.F. | 3,5 ± 0,6 (M) | 2,7 ± 0,8 (M) | 3,3 ± 0,6 (M) | 5,2 ± 0,9 (K) |
| ½ Jahr Normklima | 2,0 ± 0,7 (M) | 3,8 ± 0,5 (M) | 2,6 ± 0,5 (M) | 6,3 ± 0,8 (K) |
| ½ Jahr Normklima // 3d 60°C/95% r.F. | 3,2 ± 0,9 (M) | 2,9 ± 0,7 (M) | 3,1 ± 0,5 (M) | 5,5 ± 1,0 (K) |

| | Einschichtprodukt (Ronde), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 2,0 ± 0,5 (M) | 3,8 ± 0,6 (M) | 3,0 ± 0,4 (K) | 6,2 ± 0,5 (K) |
| 14 d Normklima//3d 60°C/95% r.F. | 3,4 ± 0,7 (M) | 2,9 ± 0,7 (M) | 3,6 ± 0,7 (M) | 5,0 ± 0,5 (K) |
| ½ Jahr Normklima | 2,4 ± 0,4 (M) | 3,3 ± 0,8 (M) | 2,9 ± 0,4 (M) | 5,6 ± 0,5 (K) |
| ½ Jahr Normklima//3d 60°C/95% r.F. | 3,7 ± 0,7 (M) | 2,8 ± 0,9 (M) | 2,9 ± 0,5 (M) | 4,8 ± 0,8 (K) |

| | Dreischichtprodukt (Ring), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 2,4 ± 0,5 (M) | 3,9 ± 0,6 (K) | 3,4 ± 0,4 (K) | 6,9 ± 0,5 (K) |
| 14 d Normklima//3d 60°C/95% r.F. | 3,6 ± 0,7 (K) | 3,1 ± 0,7 (K) | 3,7 ± 0,7 (K) | 5,5 ± 0,5 (K) |
| ½ Jahr Normklima | 2,7 ± 0,4 (M) | 3,4 ± 0,8 (M) | 2,7 ± 0,4 (M) | 6,3 ± 0,5 (K) |
| ½ Jahr Normklima//3d 60°C/95% r.F. | 3,6 ± 0,5 (M) | 2,9 ± 0,4 (M) | 3,1 ± 0,9 (M) | 5,1 ± 0,4 (K) |

| | Dreischichtprodukt (Ring), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 2,3 ± 0,6 (M) | 3,7 ± 0,5 (K) | 3,4 ± 0,9 (K) | 6,0 ± 0,4 (K) |
| 14 d Normklima//3d 60°C/95% r.F. | 3,0 ± 0,4 (M) | 3,0 ± 0,4 (M) | 3,5 ± 0,8 (M) | 5,2 ± 0,7 (K) |
| ½ Jahr Normklima | 2,0 ± 0,5 (M) | 3,1 ± 0,5 (M) | 3,3 ± 0,6 (M) | 5,5 ± 0,6 (K) |
| ½ Jahr Normklima // 3d 60°C/95% r.F. | 3,4 ± 0,6 (K) | 2,9 ± 0,6 (M) | 3,3 ± 0,9 (M) | 4,9 ± 0,6 (K) |

### Beispiel 11

| | Einschichtprodukt (Ronde), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 2,5 ± 0,7 (A) | 2,1 ± 0,8 (A) | 2,3 ± 0,4 (A) | 2,7 ± 0,6 (A) |
| 14 d Normklima//3d 60°C/95% r.F. | 2,3 ± 0,6 (A) | 2,0 ± 0,7 (A) | 2,1 ± 0,7 (A) | 2,6 ± 0,6 (A) |
| ½ Jahr Normklima | 1,3 ± 0,5 (A) | 1,1 ± 0,5 (A) | 1,2 ± 0,6 (A) | 1,7 ± 0,6 (A) |
| ½ Jahr Normklima//3d 60°C/95% r.F. | 1,1 ± 0,6 (A) | 1,3 ± 0,7 (A) | 1,1 ± 0,5 (A) | 2,1 ± 0,7 (A) |

| | Einschichtprodukt (Ronde), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 2,4 ± 0,5 (A) | 2,3 ± 0,6 (A) | 2,5 ± 0,7 (A) | 2,3 ± 0,7 (A) |
| 14 d Normklima//3d 60°C/95% r.F. | 2,1 ± 0,7 (A) | 1,8 ± 0,7 (A) | 2,0 ± 0,8 (A) | 2,4 ± 0,7 (A) |
| ½ Jahr Normklima | 1,1 ± 0,5 (A) | 1,0 ± 0,5 (A) | 0,9 ± 0,6 (A) | 1,0 ± 0,6 (A) |
| ½ Jahr Normklima//3d 60°C/95% r.F. | 1,0 ± 0,5 (A) | 0,9 ± 0,7 (A) | 0,8 ± 0,8 (A) | 1,1 ± 0,8 (A) |

| | Dreischichtprodukt (Ring), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 2,4 ± 0,6 (A) | 1,9 ± 0,9 (A) | 2,2 ± 0,7 (A) | 2,8 ± 0,6 (A) |
| 14 d Normklima//3d 60°C/95% r.F. | 2,3 ± 0,7 (A) | 2,1 ± 0,7 (A) | 2,2 ± 0,6 (A) | 2,9 ± 0,6 (A) |
| ½ Jahr Normklima | 1,1 ± 0,6 (A) | 0,9 ± 0,6 (A) | 0,8 ± 0,6 (A) | 1,5 ± 0,9 (A) |
| ½ Jahr Normklima//3d 60°C/95% r.F. | 1,1 ± 0,8 (A) | 1,1 ± 0,8 (A) | 0,7 ± 0,7 (A) | 1,6 ± 0,7 (A) |

| | Dreischichtprodukt (Ring), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 2,6 ± 0,7 (A) | 2,2 ± 0,9 (A) | 2,7 ± 1,0 (A) | 2,9 ± 0,9 (A) |
| 14 d Normklima//3d 60°C/95% r.F. | 2,6 ± 0,9 (A) | 2,1 ± 1,1 (A) | 2,4 ± 0,8 (A) | 2,8 ± 0,7 (A) |
| ½ Jahr Normklima | 0,9 ± 0,6 (A) | 1,1 ± 0,5 (A) | 1,3 ± 0,9 (A) | 1,4 ± 0,8 (A) |
| ½ Jahr Normklima // 3d 60°C/95% r. F. | 1,0 ± 0,9 (A) | 0,9 ± 0,7 (A) | 0,9 ± 0,5 (A) | 1,5 ± 0,5 (A) |

### Vergleichsbeispiele

### Für alle Vergleichsbeispiele:

Jeweils Mittelwerte aus 3 Einzelbestimmungen mit Standardabweichung.

### Bruchbilder:

A = Adhäsiv
K = Kohäsiv
M = Mischbruch

### Vergleichsbeispiel 1

| | Einschichtprodukt (Ronde), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 4,3 ± 0,7 (K) | 2,7 ± 0,8 (M) | 3,3 ± 0,7 (M) | 3,9 ± 0,9 (K) |
| 14 d Normklima // 3d 60°C/95% r.F. | 0,9 ± 0,6 (A) | 0,5 ± 0,3 (A) | 0,4 ± 0,4 (A) | 1,1 ± 0,7 (A) |
| ½ Jahr Normklima | 3,6 ± 0,5 (K) | 2,4 ± 0,7 (M) | 3,0 ± 0,6 (M) | 3,2 ± 1,0 (K) |
| ½ Jahr Normklima // 3d 60°C/95% r.F. | 0,4 ± 0,3 (A) | 0,3 ± 0,2 (A) | 0,4 ± 0,3 (A) | 0,6 ± 0,4 (A) |

| | Einschichtprodukt (Ronde), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 4,6 ± 0,4 (K) | 3,2 ± 0,5 (M) | 3,8 ± 0,6 (M) | 4,3 ± 0,7 (K) |
| 14 d Normklima // 3d 60°C/95% r.F. | 0,4 ± 0,3 (A) | 0,3 ± 0,3 (A) | 0,6 ± 0,3 (A) | 0,8 ± 0,5 (A) |
| ½ Jahr Normklima | 4,7 ± 0,6 (K) | 3,0 ± 0,4 (M) | 3,3 ± 0,5 (M) | 3,4 ± 0,7 (K) |
| ½ Jahr Normklima // 3d 60°C/95% r.F. | 0,3 ± 0,2 (A) | 0,2 ± 0,2 (A) | 0,3 ± 0,2 (A) | 0,7 ± 0,3 (A) |

| | Dreischichtprodukt (Ring), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 4,4 ± 0,5 (K) | 2,9 ± 0,5 (A) | 3,1 ± 0,7 (A) | 3,4 ± 0,6 (M) |
| 14 d Normklima // 3d 60°C/95% r.F. | 0,5 ± 0,4 (A) | 0,3 ± 0,2 (A) | 0,5 ± 0,3 (A) | 0,6 ± 0,4 (A) |
| ½ Jahr Normklima | 4,0 ± 0,6 (K) | 3,0 ± 0,4 (A) | 2,9 ± 0,5 (A) | 3,6 ± 0,7 (K) |
| ½ Jahr Normklima // 3d 60°C/95% r.F. | 0,4 ± 0,3 (A) | 0,3 ± 0,2 (A) | 0,4 ± 0,2 (A) | 0,5 ± 0,4 (A) |

| | Dreischichtprodukt (Ring), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 4,9 ± 0,8 (K) | 3,0 ± 0,6 (A) | 3,6 ± 0,5 (M) | 3,8 ± 0,5 (M) |
| 14 d Normklima // 3d 60°C/95% r.F. | 0,6 ± 0,5 (A) | 0,4 ± 0,2 (A) | 0,7 ± 0,4 (A) | 0,7 ± 0,4 (A) |
| ½ Jahr Normklima | 4,4 ± 0,7 (K) | 2,6 ± 0,8 (A) | 2,8 ± 0,6 (A) | 3,9 ± 0,8 (K) |
| ½ Jahr Normklima // 3d 60°C/95% r.F. | 0,5 ± 0,3 (A) | 0,2 ± 0,1 (A) | 0,5 ± 0,3 (A) | 0,7 ± 0,3 (A) |

### Vergleichsbeispiel 2

| | Einschichtprodukt (Ronde), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 3,9 ± 0,5 (K) | 2,4 ± 0,4 (M) | 2,9 ± 0,4 (M) | 3,5 ± 0,3 (K) |
| 14 d Normklima // 3d 60°C/95% r.F. | 0,7 ± 0,6 (A) | 0,3 ± 0,2 (A) | 0,4 ± 0,1 (A) | 0,8 ± 0,2 (A) |
| ½ Jahr Normklima | 3,7 ± 0,5 (K) | 2,0 ± 0,6 (A) | 2,8 ± 0,5 (M) | 3,2 ± 0,6 (K) |
| ½ Jahr Normklima // 3d 60°C/95% r. F. | 0,7 ± 0,2 (A) | 0,4 ± 0,2 (A) | 0,6 ± 0,3 (A) | 0,7 ± 0,4 (A) |

| | Einschichtprodukt (Ronde), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 4,2 ± 0,9 (K) | 2,7 ± 0,5 (M) | 2,8 ± 0,5 (M) | 3,3 ± 0,6 (K) |
| 14 d Normklima//3d 60°C/95% r.F. | 0,4 ± 0,2 (A) | 0,2 ± 0,2 (A) | 0,3 ± 0,2 (A) | 0,5 ± 0,3 (A) |
| ½ Jahr Normklima | 4,3 ± 0,3 (K) | 2,5 ± 0,7 (A) | 2,6 ± 0,4 (M) | 3,5 ± 0,5 (K) |
| ½ Jahr Normklima//3d 60°C/95% r.F. | 0,5 ± 0,3 (A) | 0,3 ± 0,1 (A) | 0,7 ± 0,4 (A) | 0,6 ± 0,4 (A) |

| | Dreischichtprodukt (Ring), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 3,8 ± 0,3 (K) | 2,4 ± 0,4 (M) | 2,5 ± 0,5 (M) | 3,7 ± 0,4 (K) |
| 14 d Normklima//3d 60°C/95% r.F. | 0,5 ± 0,3 (A) | 0,4 ± 0,3 (A) | 0,5 ± 0,1 (A) | 0,6 ± 0,5 (A) |
| ½ Jahr Normklima | 4,0 ± 0,4 (K) | 2,8 ± 0,5 (A) | 2,5 ± 0,5 (A) | 3,4 ± 0,3 (K) |
| ½ Jahr Normklima//3d 60°C/95% r.F. | 0,3 ± 0,2 (A) | 0,3 ± 0,1 (A) | 0,5 ± 0,3 (A) | 0,7 ± 0,3 (A) |

| | Dreischichtprodukt (Ring), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 4,5 ± 0,3 (K) | 2,9 ± 0,3 (M) | 2,7 ± 0,4 (M) | 3,6 ± 0,4 (K) |
| 14 d Normklima//3d 60°C/95% r.F. | 0,8 ± 0,3 (A) | 0,3 ± 0,2 (A) | 0,3 ± 0,1 (A) | 0,6 ± 0,2 (A) |
| ½ Jahr Normklima | 4,1 ± 0,6 (K) | 2,3 ± 0,5 (A) | 2,7 ± 0,5 (M) | 3,1 ± 0,4 (K) |
| ½ Jahr Normklima // 3d 60°C/95% r. F. | 0,9 ± 0,1 (A) | 0,5 ± 0,3 (A) | 0,4 ± 0,2 (A) | 0,6 ± 0,2 (A) |

### Vergleichsbeispiel 3

| | Einschichtprodukt (Ronde), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 6,3 ± 0,4 (K) | 1,6 ± 0,3 (A) | 0,9 ± 0,4 (A) | 3,6 ± 0,6 (M) |
| 14 d Normklima // 3d 60°C/95% r.F. | 2,4 ± 0,5 (A) | 0,6 ± 0,3 (A) | 0,3 ± 0,2 (A) | 1,8 ± 0,4 (A) |
| ½ Jahr Normklima | 2,8 ± 0,5 (A) | 0,9 ± 0,7 (A) | 0,5 ± 0,2 (A) | 1,4 ± 0,4 (A) |
| ½ Jahr Normklima//3d 60°C/95% r.F. | 0,5 ± 0,3 (A) | 0,2 ± 0,1 (A) | 0,2 ± 0,1 (A) | 0,6 ± 0,2 (A) |

| | Einschichtprodukt (Ronde), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 6,6 ± 0,7 (K) | 1,9 ± 0,5 (A) | 1,1 ± 0,3 (A) | 3,7 ± 0,9 (K) |
| 14 d Normklima//3d 60°C/95% r.F. | 3,7 ± 0,4 (A) | 0,7 ± 0,2 (A) | 0,6 ± 0,3 (A) | 1,3 ± 0,3 (A) |
| ½ Jahr Normklima | 2,4 ± 0,2 (A) | 0,8 ± 0,5 (A) | 0,6 ± 0,3 (A) | 1,1 ± 0,3 (A) |
| ½ Jahr Normklima//3d 60°C/95% r.F. | 0,6 ± 0,1 (A) | 0,4 ± 0,2 (A) | 0,4 ± 0,1 (A) | 0,5 ± 0,3 (A) |

| | Dreischichtprodukt (Ring), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 6,0 ± 0,8 (K) | 1,9 ± 0,7 (A) | 0,8 ± 0,3 (A) | 3,2 ± 0,8 (M) |
| 14 d Normklima//3d 60°C/95% r.F. | 2,1 ± 0,6 (A) | 0,9 ± 0,3 (A) | 0,5 ± 0,3 (A) | 1,1 ± 0,3 (A) |
| ½ Jahr Normklima | 2,0 ± 0,4 (A) | 1,0 ± 0,4 (A) | 0,6 ± 0,4 (A) | 1,1 ± 0,2 (A) |
| ½ Jahr Normklima//3d 60°C/95% r.F. | 0,3 ± 0,1 (A) | 0,1 ± 0,1 (A) | 0,3 ± 0,2 (A) | 0,5 ± 0,2 (A) |

| | Dreischichtprodukt (Ring), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 6,6 ± 0,3 (K) | 2,3 ± 0,6 (A) | 1,2 ± 0,6 (A) | 3,9 ± 0,5 (M) |
| 14 d Normklima//3d 60°C/95% r.F. | 3,2 ± 0,7 (A) | 1,8 ± 0,4 (A) | 0,7 ± 0,5 (A) | 2,3 ± 0,9 (A) |
| ½ Jahr Normklima | 2,3 ± 0,3 (A) | 0,5 ± 0,3 (A) | 0,4 ± 0,2 (A) | 1,1 ± 0,5 (A) |
| ½ Jahr Normklima // 3d 60°C/95% r.F. | 0,4 ± 0,1 (A) | 0,1 ± 0,1 (A) | 0,2 ± 0,1 (A) | 0,5 ± 0,3 (A) |

### Vergleichsbeispiel 4

| | Einschichtprodukt (Ronde), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 5,2 ± 0,7 (K) | 1,5 ± 0,2 (A) | 1,6 ± 0,3 (A) | 3,0 ± 0,8 (M) |
| 14 d Normklima // 3d 60°C/95% r.F. | 0,7 ± 0,6 (A) | 0,3 ± 0,4 (A) | 0,4 ± 0,3 (A) | 0,6 ± 0,5 (A) |
| ½ Jahr Normklima | 2,2 ± 0,4 (A) | 0,7 ± 0,5 (A) | 0,8 ± 0,4 (A) | 1,8 ± 0,5 (A) |
| ½ Jahr Normklima // 3d 60°C/95% r.F. | 0,4 ± 0,2 (A) | 0,1 ± 0,1 (A) | 0,2 ± 0,1 (A) | 0,4 ± 0,2 (A) |

| | Einschichtprodukt (Ronde), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 5,5 ± 0,5 (K) | 1,8 ± 0,5 (A) | 1,9 ± 0,4 (A) | 3,3 ± 0,6 (M) |
| 14 d Normklima // 3d 60°C/95% r.F. | 0,8 ± 0,3 (A) | 0,4 ± 0,1 (A) | 0,4 ± 0,2 (A) | 0,5 ± 0,2 (A) |
| ½ Jahr Normklima | 2,0 ± 0,3 (A) | 0,8 ± 0,4 (A) | 1,0 ± 0,3 (A) | 1,5 ± 0,5 (A) |
| ½ Jahr Normklima//3d 60°C/95% r.F. | 0,4 ± 0,1 (A) | 0,2 ± 0,1 (A) | 0,2 ± 0,2 (A) | 0,5 ± 0,2 (A) |

| | Dreischichtprodukt (Ring), UV-Licht (365 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 6,1 ± 0,1 (K) | 2,0 ± 0,4 (A) | 1,9 ± 0,4 (A) | 2,7 ± 0,5 (A) |
| 14 d Normklima // 3d 60°C/95% r.F. | 0,5 ± 0,3 (A) | 0,2 ± 0,4 (A) | 0,4 ± 0,4 (A) | 0,9 ± 0,4 (A) |
| ½ Jahr Normklima | 5,0 ± 0,6 (A) | 1,0 ± 0,5 (A) | 0,8 ± 0,6 (A) | 1,5 ± 0,4 (A) |
| ½ Jahr Normklima // 3d 60°C/95% r.F. | 0,3 ± 0,1 (A) | 0,1 ± 0,1 (A) | 0,1 ± 0,1 (A) | 0,6 ± 0,3 (A) |

| | Dreischichtprodukt (Ring), Blaulicht (460 nm) | | | |
|---|---|---|---|---|
| Prüfkörper | PC/ PC | PC/ PA | PC/ AI | Stahl/ Stahl |
| Einheit | [MPa] | [MPa] | [MPa] | [MPa] |
| 14 d Normklima | 6,4 ± 0,4 (K) | 2,3 ± 0,6 (A) | 2,5 ± 0,4 (A) | 3,9 ± 0,5 (K) |
| 14 d Normklima // 3d 60°C/95% r.F. | 1,1 ± 0,4 (A) | 0,7 ± 0,1 (A) | 0,5 ± 0,1 (A) | 0,9 ± 0,3 (A) |
| ½ Jahr Normklima | 3,1 ± 0,7 (A) | 0,9 ± 0,8 (A) | 1,1 ± 0,5 (A) | 2,2 ± 0,4 (A) |
| ½ Jahr Normklima // 3d 60°C/95% r.F. | 0,6 ± 0,3 (A) | 0,3 ± 0,3 (A) | 0,4 ± 0,2 (A) | 0,6 ± 0,2 (A) |

### Diskussion der Ergebnisse

Der erfindungsgemäße reaktive Klebstofffilm kann sowohl mit UV-LED-Licht als auch blauem LED Licht gehärtet werden. Nach erfolgter Bestrahlung härtet er nicht sofort durch, sondern hat eine Offenzeit von mindestens 5 Minuten. Er härtet im Dunkeln weiter aus, so dass er für die Verklebung nicht transparenter Substrate geeignet ist. Er stellt gegenüber dem Stand der Technik dahingehend eine deutliche Verbesserung dar, dass Verklebungen mit diesem Klebstofffilm sich durch eine hohe Verklebungsfestigkeit und eine hohe Feuchtwärmebeständigkeit auszeichnen. Dies konnte für Verklebungen von Polycarbonat (PC), Polyamid (PA), Aluminium und SUS-Stahl gezeigt werden. Bevorzugte Ausführungsformen führen zu höheren Verklebungsfestigkeiten und/ oder gleichmäßigeren Ergebnissen auf den unterschiedlichen Substraten sowie zu einer besseren Lagerstabilität. Die Vergleichsbeispiele ohne das Polymerisat aus Monomeren, umfassend N-Vinylverbindungen zeigen, dass nur eine unzureichende Feuchtwärmebeständigkeit der Klebverbunde gegeben ist. Ein Ersatz des Polymerisats durch monomeres N-Vinylcaprolactam führt insbesondere nach einer längeren Lagerzeit der Stanzlinge zu einer unzureichenden Feuchtwärmebeständigkeit der Klebverbunde und generell zu einer unzureichenden Lagerstabilität der Stanzlinge.

## Patentansprüche

1. Lichthärtender, reaktiver, haftklebriger Klebstofffilm, umfassend
(a) mindestens ein reaktives Monomer oder Reaktivharz,
(b) einen Initiator,
(c) einen Photoredox-Katalysator,
(d) ein Polymerisat, erhalten durch radikalische Polymerisation von Kohlenstoff-Kohlenstoff-Doppelbindungen enthaltenden Monomeren, **dadurch gekennzeichnet, dass** diese Monomere N-Vinyl-Verbindungen umfassen,
und
(e) ein filmbildendes Polymer.

2. Lichthärtender, reaktiver, haftklebriger Klebstofffilm nach Anspruch 1, **dadurch gekennzeichnet, dass** das reaktive Monomer oder Reaktivharz (a) mindestens einen Vertreter umfasst der ausgewählt ist aus Acrylsäureester, Methacrylsäureester, Vinylverbindungen und/oder oligomeren oder polymeren Verbindungen mit Kohlenstoff-Kohlenstoff-Doppelbindungen, sowie vernetzenden reaktiven Monomeren wie Diacrylaten, Dimethacrylaten, Triacrylaten, Trimethacrylaten, höher funktionellen Acrylaten, sowie höher funktionellen Methacrylaten, bevorzugt 2-Phenoxyethylacrylat, 2-Phenoxyethylmethacrylat, 2-Hydroxy-3-phenoxy-propylacrylat, 2-Hydroxy-3-phenoxy-propylmethacrylat, 2-[2-(Methacryloyloxy)ethoxycarbonyl]benzoesäure, 2-[[(Phenylamino)carbonyl]oxy]ethyl methacrylat, 2-Tert-butyl-6-[(3-tert-butyl-2-hydroxy-5-methylphenyl)methyl]-4-methylphenyl prop-2-enoat, (5-Ethyl-1,3-dioxan-5-yl) methylacrylat, (2-Oxo-1,3-dioxolan-4-yl)methyl methacrylat, Di(ethylenglycol)-2-ethylhexylether acrylat, (2,2-Dimethyl-1,3-dioxolan-4-yl)methylprop-2-enoat, 2-Bernsteinsäure mono-[2-(acryloyloxy)-ethylester], Bernsteinsäure mono-[2-(methacryloyloxy)ethylester], (2,2-Pentamethylen-1,3-oxazolidyl-3)ethylmethacrylat, 2-Hydroxy-3-(prop-2-enoyloxy)propyl-2-methyl-2-propylhexanoat, 2-[[(Butylamino) carbonyl]oxy]ethyl acrylat, Stearylacrylat, Stearylmethacrylat, sowie die vernetzenden reaktiven Monomere Diurethan dimethacrylat (Isomerenmischung), Bisphenol A glycerolat dimethacrylat (BIS-GMA), Bisphenol A dimethacrylat (BIS-DMA), Ethylenglykol-diacrylat, Ethylenglykoldimethacrylat, Trimethyloylpropanpropoxylattriacrylat, Trimethyloylpropan-triacrylat und Di(trimethylolpropan) tetraacrylat.

3. Lichthärtender, reaktiver, haftklebriger Klebstofffilm nach einem der vorhergehenden Ansprüche, **dadurch gekennzeichnet, dass** der Photoredox-Katalysator (c)
Ruthenium als Zentralatom und Bipyridin oder ein einfach oder mehrfach substituiertes Bipyridin-Derivat als Liganden,
oder
Iridium als Zentralatom und Phenylpyridin oder ein einfach oder mehrfach substituiertes Phenylpyridin-Derivat als Liganden,
umfasst.

4. Lichthärtender, reaktiver, haftklebriger Klebstofffilm nach einem der vorhergehenden Ansprüche, **dadurch gekennzeichnet, dass** der Photoredox-Katalysator (c) [Tris(2,2'-bipyridyl)ruthenium(II)]²⁺, Tris[2-(2,4-difluorophenyl)pyridin]iridium(III) oder Tris(2-phenylpyridinato)iridium(III) umfasst.

5. Lichthärtender, reaktiver, haftklebriger Klebstofffilm nach einem der vorhergehenden Ansprüche, **dadurch gekennzeichnet, dass** die N-Vinylverbindungen des Polymerisats (d) Verbindungen entsprechend der Formel (II) sind oder eine Struktureinheit der Formel (II) umfassen, 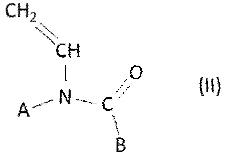 wobei
- A ein organischer Rest R oder H ist,
- B ein organischer Rest R oder H oder OR oder OH oder NR₂ oder NHR oder NH₂ ist,
- R unabhängig voneinander für einen substituierten oder unsubstituierten verzweigten, cyclischen oder linearen C₁₋₂₀-Alkyl-Rest oder C₂₋₂₀-Alkenyl-Rest; oder einen substituierten oder unsubstituierten Aryl- bzw. Heteroaryl steht,
- A und B einen Ring bilden können.

6. Lichthärtender, reaktiver, haftklebriger Klebstofffilm nach einem der vorhergehenden Ansprüche, **dadurch gekennzeichnet, dass** die N-Vinylverbindungen des Polymerisats (d) N-Vinylcaprolactam oder N-Vinylpyrrolidon oder 5-Methyl-3-vinyl-2-oxazolidinon umfassen.

7. Lichthärtender, reaktiver, haftklebriger Klebstofffilm nach einem der vorhergehenden Ansprüche, **dadurch gekennzeichnet, dass** das filmbildende Polymer (e) ein thermoplastisches Polymer, ein Elastomer und/oder ein thermoplastisches Elastomer umfasst.

8. Lichthärtender, reaktiver, haftklebriger Klebstofffilm nach Anspruch 7, **dadurch gekennzeichnet, dass** das filmbildende Polymer (e) ein thermoplastisches Polyurethan umfasst.

9. Lichthärtender, reaktiver, haftklebriger Klebstofffilm nach einem der vorhergehenden Ansprüche umfassend
(a) 10 bis 80 Gew.% mindestens eines reaktiven Monomers oder Reaktivharzes,
(b) 0,1 bis 10,0 Gew.% Initiator,
(c) bis zu 1,0 Gew.% Photoredox-Katalysator,
(d) 1,0 bis 50,0 Gew.% Polymerisat, erhalten durch radikalische Polymerisation von Kohlenstoff-Kohlenstoff-Doppelbindungen enthaltenden Monomeren, **dadurch gekennzeichnet, dass** diese Monomere N-Vinyl-Verbindungen umfassen,
(e) 10 bis 90 Gew.% filmbildendes Polymer.

10. Lichthärtender, reaktiver, haftklebriger Klebstofffilm nach Anspruch 9 umfassend
(a) 20 bis 60 Gew.% mindestens eines reaktiven Monomers oder Reaktivharzes,
(b) 0,2 bis 4,0 Gew.% Initiator,
(c) bis zu 0,5 Gew.% Photoredox-Katalysator,
(d) 5,0 bis 30,0 Gew.% Polymerisat, erhalten durch radikalische Polymerisation von Kohlenstoff-Kohlenstoff-Doppelbindungen enthaltenden Monomeren, **dadurch gekennzeichnet, dass** diese Monomere N-Vinyl-Verbindungen umfassen,
(e) 20 bis 60 Gew.% filmbildendes Polymer.

11. Lichthärtender, reaktiver, haftklebriger Klebstofffilm nach einem der vorhergehenden Ansprüche, umfassend weitere Filme, Folien, Schichten, Träger, Klebstofffilme, Haftklebstofffilme, Trennpapiere und/oder Trennliner.

12. Reaktives, haftklebriges Klebeband umfassend die Schichten (A1), (A2) und (B), dadurch charakterisiert, dass es einen lichthärtenden, reaktiven, haftklebrigen Klebstofffilm (A1) nach einem der vorhergehenden Ansprüche und einen weiteren reaktiven, haftklebrigen Klebstofffilm (A2) nach einem der vorhergehenden Ansprüche sowie einen Film, eine Folie, eine Schicht, oder einen Träger (B), flächig angeordnet zwischen den beiden reaktiven, haftklebrigen Klebstofffilmen, umfasst.

13. Verfahren zur Herstellung eines reaktiven, haftklebriger Klebstofffilms nach einem der Ansprüche 1 bis 11, **dadurch gekennzeichnet, dass** das Verfahren unter Ausschluss von UV-Licht oder sichtbarem Licht der Wellenlänge, durch die der jeweilige Photoredox-Katalysator angeregt wird, die folgenden Schritte umfasst:
i. Auflösen und/oder Feinverteilen der Inhaltsstoffe in einem oder mehreren Lösemittel(n) und/oder Wasser,
ii. Mischen der aufgelösten oder feinverteilten Inhaltsstoffe,
iii. Beschichten eines Films, einer Folie, einer Schicht, eines Trägers, eines Klebstofffilms, eines Haftklebstofffilms, bevorzugt eines Trennpapiers oder - liners mit der Mischung aufgelöster oder feinverteilter Inhaltsstoffe nach Schritt 2,
iv. Verdunsten des Lösemittels und/oder Wassers,
v. Gegebenenfalls Aufwickeln des reaktiven Klebstofffilms zu einer Rolle.

14. Verwendung eines reaktiven, haftklebrigen Klebstofffilms nach einem der vorhergehenden Ansprüche 1 bis 11 oder eines reaktives, haftklebriges Klebeband nach Anspruch 12 zur Herstellung von Verklebungen auf Materialien ausgewählt aus Kunststoff, Metall, Glas oder Keramik.

15. Verbundkörper umfassend zumindest zwei Verklebungsflächen, die durch den gehärteten reaktiven, haftklebrigen Klebstofffilm nach einem der vorhergehenden Ansprüche 1 bis 11 oder die durch das gehärtete reaktive, haftklebrige Klebeband nach Anspruch 12 miteinander verbunden sind.

## Claims

1. Light-curing, reactive, pressure-sensitive adhesive film of adhesive, comprising
(a) at least one reactive monomer or reactive resin,
(b) an initiator,
(c) a photoredox catalyst,
(d) a polymer obtained by radical polymerization of monomers containing carbon-carbon double bonds, **characterized in that** these monomers comprise N-vinyl compounds,
and
(e) a film-forming polymer.

2. Light-curing, reactive, pressure-sensitive adhesive film of adhesive according to Claim 1, **characterized in that** the reactive monomer or reactive resin (a) comprises at least one representative selected from acrylic esters, methacrylic esters, vinyl compounds and/or oligomeric or polymeric compounds having carbon-carbon double bonds, and also crosslinking reactive monomers, such as diacrylates, dimethacrylates, triacrylates, trimethacrylates, acrylates of higher functionality, and methacrylates of higher functionality, preferably 2-phenoxyethyl acrylate, 2-phenoxyethyl methacrylate, 2-hydroxy-3-phenoxypropyl acrylate, 2-hydroxy-3-phenoxypropyl methacrylate, 2-[2-(methacryloyloxy)ethoxycarbonyl]benzoic acid, 2-[[(phenylamino)carbonyl]oxy]ethyl methacrylate, 2-tert-butyl-6-[(3-tert-butyl-2-hydroxy-5-methylphenyl)methyl]-4-methylphenyl prop-2-enoate, (5-ethyl-1,3-dioxan-5-yl)methyl acrylate, (2-oxo-1,3-dioxolan-4-yl)methyl methacrylate, di(ethylene glycol) 2-ethylhexyl ether acrylate, (2,2-dimethyl-1,3-dioxolan-4-yl)methyl prop-2-enoate, 2-succinic acid mono-[2-(acryloyloxy)ethyl ester], succinic acid mono-[2-(methacryloyloxy)ethyl ester], (2,2-pentamethylene-1,3-oxazolid-3-yl)ethyl methacrylate, 2-hydroxy-3-(prop-2-enoyloxy)propyl 2-methyl-2-propylhexanoate, 2-[[(butylamino)carbonyl]oxy]ethyl acrylate, stearyl acrylate, stearyl methacrylate, and also the crosslinking reactive monomers diurethane dimethacrylate (isomer mixture), bisphenol A glycerolate dimethacrylate (BIS-GMA), bisphenol A dimethacrylate (BIS-DMA), ethylene glycol diacrylate, ethylene glycol dimethacrylate, trimethyloylpropane propoxylate triacrylate, trimethyloylpropane triacrylate and di(trimethylolpropane) tetraacrylate.

3. Light-curing, reactive, pressure-sensitive adhesive film of adhesive according to either of the preceding claims, **characterized in that** the photoredox catalyst (c) comprises
ruthenium as central atom and bipyridine or a singularly or multiply substituted bipyridine derivative as ligand,
or
iridium as central atom and phenylpyridine or a singularly or multiply substituted phenylpyridine derivate as ligand.

4. Light-curing, reactive, pressure-sensitive adhesive film of adhesive according to any of the preceding claims, **characterized in that** the photoredox catalyst (c) comprises [tris (2,2' -bipyridyl) ruthenium (II)]²⁺, tris[2-(2,4-difluorophenyl)pyridine]iridium(III) or tris(2-phenylpyridinato)iridium(III) .

5. Light-curing, reactive, pressure-sensitive adhesive film of adhesive according to any of the preceding claims, **characterized in that** the N-vinyl compounds of the polymer (d) are compounds corresponding to the formula (II) or comprise a structural unit of the formula (II), 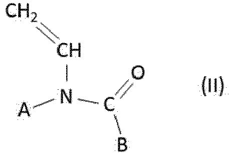 where
- A is an organic radical R or H,
- B is an organic radical R or H or OR or OH or NR₂ or NHR or NH₂,
- R independently and at each occurrence is a substituted or unsubstituted branched, cyclic or linear C₁₋₂₀ alkyl radical or C₂₋₂₀ alkenyl radical; or is a substituted or unsubstituted aryl or heteroaryl,
- A and B may form a ring.

6. Light-curing, reactive, pressure-sensitive adhesive film of adhesive according to any of the preceding claims, **characterized in that** the N-vinyl compounds of the polymer (d) comprise N-vinylcaprolactam or N-vinylpyrrolidone or 5-methyl-3-vinyl-2-oxazolidinone.

7. Light-curing, reactive, pressure-sensitive adhesive film of adhesive according to any of the preceding claims, **characterized in that** the film-forming polymer (e) comprises a thermoplastic polymer, an elastomer and/or a thermoplastic elastomer.

8. Light-curing, reactive, pressure-sensitive adhesive film of adhesive according to Claim 7, **characterized in that** the film-forming polymer (e) comprises a thermoplastic polyurethane.

9. Light-curing, reactive, pressure-sensitive adhesive film of adhesive according to any of the preceding claims, comprising
(a) 10 to 80 wt% of at least one reactive monomer or reactive resin,
(b) 0.1 to 10.0 wt% of initiator,
(c) up to 1.0 wt% of photoredox catalyst,
(d) 1.0 to 50.0 wt% of polymer obtained by radical polymerization of monomers containing carbon-carbon double bonds, **characterized in that** these monomers comprise N-vinyl compounds,
(e) 10 to 90 wt% of film-forming polymer.

10. Light-curing, reactive, pressure-sensitive adhesive film of adhesive according to Claim 9, comprising
(a) 20 to 60 wt% of at least one reactive monomer or reactive resin,
(b) 0.2 to 4.0 wt% of initiator,
(c) up to 0.5 wt% of photoredox catalyst,
(d) 5.0 to 30.0 wt% of polymer obtained by radical polymerization of monomers containing carbon-carbon double bonds, **characterized in that** these monomers comprise N-vinyl compounds,
(e) 20 to 60 wt% of film-forming polymer.

11. Light-curing, reactive, pressure-sensitive adhesive film of adhesive according to any of the preceding claims, comprising further films, foils, layers, carriers, films of adhesive, films of pressure-sensitive adhesive, release papers and/or release liners.

12. Reactive, pressure-sensitive adhesive tape comprising the layers (A1), (A2) and (B), **characterized in that** it comprises a light-curing, reactive, pressure-sensitive adhesive film of adhesive (A1) according to any of the preceding claims and a further reactive, pressure-sensitive adhesive film of adhesive (A2) according to any of the preceding claims and also a film, a foil, a layer or a carrier (B) arranged flatly between the two reactive, pressure-sensitive adhesive films of adhesive.

13. Process for producing a reactive, pressure-sensitive adhesive film of adhesive according to any of Claims 1 to 11, **characterized in that** the process, with exclusion of UV light or visible light of the wavelength by which the respective photoredox catalyst is excited, comprises the following steps:
i. dissolving and/or finely dividing the ingredients in one or more solvents and/or water,
ii. mixing the dissolved or finely divided ingredients,
iii. coating a film, a foil, a layer, a carrier, a film of adhesive, a film of pressure-sensitive adhesive, preferably a release paper or release liner, with the mixture of dissolved or finely divided ingredients according to step 2,
iv. evaporating the solvent and/or water,
v. optionally winding the reactive film of adhesive into a roll.

14. Use of a reactive, pressure-sensitive adhesive film of adhesive according to any of preceding Claims 1 to 11 or of a reactive, pressure-sensitive adhesive tape according to Claim 12 for producing bonds on materials selected from plastic, metal, glass or ceramic.

15. Composite element comprising at least two bonding faces joined to one another by the cured reactive, pressure-sensitive adhesive film of adhesive according to any of preceding Claims 1 to 11 or by the cured reactive, pressure-sensitive adhesive tape according to Claim 12.

## Revendications

1. Film adhésif de contact réactif photodurcissable, comprenant
(a) au moins un monomère réactif ou une résine réactive,
(b) un amorceur,
(c) un catalyseur photorédox,
(d) un polymère, obtenu par polymérisation radicalaire de monomères contenant des doubles liaisons carbone-carbone, **caractérisé en ce que** ces monomères comprennent des composés N-vinyliques,
et
(e) un polymère filmogène.

2. Film adhésif de contact réactif photodurcissable selon la revendication 1, **caractérisé en ce que** le monomère réactif ou la résine réactive (a) comprend au moins un représentant qui est choisi parmi les esters de l'acide acrylique, les esters de l'acide méthacrylique, les composés vinyliques et/ou les composés oligomères ou polymères ayant des doubles liaisons carbone-carbone, ainsi que les monomères réactifs réticulables tels que les diacrylates, les diméthacrylates, les triacrylates, les triméthacrylates, les acrylates à fonctionnalité supérieure, ainsi que les méthacrylates à fonctionnalité supérieure, de préférence l'acrylate de 2-phénoxyéthyle, le méthacrylate de 2-phénoxyéthyle, l'acrylate de 2-hydroxy-3-phénoxy-propyle, le méthacrylate de 2-hydroxy-3-phénoxy-propyle, l'acide 2-[2-(méthacryloyloxy)éthoxycarbonyl]benzoïque, le méthacrylate de 2-[[(phénylamino)carbonyl]oxy]éthyle, le prop-2-énoate de 2-tert-butyl-6-[(3-tert-butyl-2-hydroxy-5-méthylphényl)méthyl]-4-méthylphényle, l'acrylate de (5-éthyl-1,3-dioxan-5-yl)méthyle, le méthacrylate de (2-oxo-1,3-dioxolan-4-yl)méthyle, l'acrylate de l'éther 2-éthylhexylique du di(éthylèneglycol), le prop-2-énoate de (2,2-diméthyl-1,3-dioxolan-4-yl)méthyle, l'ester mono-2-(acryloyloxy)-éthylique de l'acide 2-succinique, l'ester mono-2-(méthacryloyloxy)-éthylique de l'acide succinique, le méthacrylate de (2,2-pentaméthylène-1,3-oxazolidyl-3)éthyle, le 2-méthyl-2-propyl hexanoate de 2-hydroxy-3-(prop-2-énoyloxy)propyle, l'acrylate de 2-[[(butylamino)carbonyl]oxy]éthyle, l'acrylate de stéaryle, le méthacrylate de stéaryle, ainsi que les monomères réactifs réticulables diméthacrylate de diuréthane (mélange d'isomères), glycérolate et diméthacrylate de bisphénol A (BIS-GMA), diméthacrylate de bisphénol A (BIS-DMA), diacrylate d'éthylèneglycol, diméthacrylate d'éthylèneglycol, propoxylate-triacrylate de triméthyloylpropane, triacrylate de triméthyloylpropane et tétraacrylate de di(triméthylolpropane).

3. Film adhésif de contact réactif photodurcissable selon l'une des revendications précédentes, **caractérisé en ce que** le catalyseur photorédox (c) comprend du ruthénium en tant qu'atome central et de la bipyridine ou un dérivé de bipyridine une ou plusieurs fois substitué en tant que ligand,
ou
de l'iridium en tant qu'atome central et de la phénylpyridine ou un dérivé de phénylpyridine une ou plusieurs fois substitué en tant que ligand.

4. Film adhésif de contact réactif photodurcissable selon l'une des revendications précédentes, **caractérisé en ce que** le catalyseur photorédox (c) comprend le [tris(2,2'-bipyridyl)ruthénium(II)]²⁺, le tris[2-(2,4-difluorophényl)pyridin]iridium(III) ou le tris(2-phénylpyridinato)iridium(III) .

5. Film adhésif de contact réactif photodurcissable selon l'une des revendications précédentes, **caractérisé en ce que** les composés N-vinyliques du polymère (d) sont des composés de Formule (II) ou comprennent un motif structural de Formule (II) 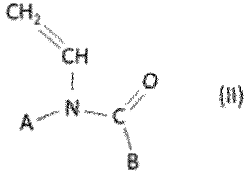 dans laquelle
- A représente un radical organique R ou H,
- B représente un radical organique R ou H ou OR ou OH ou NR₂ ou NHR ou NH₂,
- R représente indépendamment l'un de l'autre un radical alkyle en C₁₋₂₀ ou un radical alcényle en C₂₋₂₀ substitué ou non substitué, ramifié, cyclique ou linéaire, ou un aryle ou hétéroaryle substitué ou non substitué,
- A et B peuvent former un cycle.

6. Film adhésif de contact réactif photodurcissable selon l'une des revendications précédentes, **caractérisé en ce que** les composés N-vinyliques du polymère (d) comprennent du N-vinylcaprolactame ou de la N-vinylpyrrolidone ou de la 5-méthyl-3-vinyl-2-oxazolidinone.

7. Film adhésif de contact réactif photodurcissable selon l'une des revendications précédentes, **caractérisé en ce que** le polymère filmogène (e) comprend un polymère thermoplastique, un élastomère et/ou un élastomère thermoplastique.

8. Film adhésif de contact réactif photodurcissable selon la revendication 7, **caractérisé en ce que** le polymère filmogène (e) comprend un polyuréthane thermoplastique.

9. Film adhésif de contact réactif photodurcissable selon l'une des revendications précédentes, comprenant
(a) 10 à 80 % en poids d'au moins un monomère réactif ou d'une résine réactive,
(b) 0,1 à 10,0 % en poids d'un amorceur,
(c) jusqu'à 1,0 % en poids d'un catalyseur photorédox,
(d) 1,0 à 50,0 % en poids d'un polymère obtenu par polymérisation radicalaire de monomères contenant des doubles liaisons carbone-carbone, **caractérisé en ce que** ces monomères comprennent des composés N-vinyliques,
(e) 10 à 90 % en poids d'un polymère filmogène.

10. Film adhésif de contact réactif photodurcissable selon la revendication 9, comprenant
(a) 20 à 60 % en poids d'au moins un monomère réactif ou d'une résine réactive,
(b) 0,2 à 4,0 % en poids d'un amorceur,
(c) jusqu'à 0,5 % en poids d'un catalyseur photorédox,
(d) 5,0 à 30,0 % en poids d'un polymère obtenu par polymérisation radicalaire de monomères contenant des doubles liaisons carbone-carbone, **caractérisé en ce que** ces monomères comprennent des composés N-vinyliques,
(e) 20 à 60 % en poids d'un polymère filmogène.

11. Film adhésif de contact réactif photodurcissable selon l'une des revendications précédentes, comprenant en outre des films, des feuilles, des couches, des supports, des films adhésifs, des films adhésifs de contact, des papiers photoadhésifs ou des bandes antiadhésives.

12. Ruban adhésif de contact réactif comprenant les couches (A1), (A2) et (B), **caractérisé en ce qu'**il comprend un film adhésif de contact réactif photodurcissable (A1) selon l'une des revendications précédentes et un autre film adhésif de contact réactif (A2) selon l'une des revendications précédentes, ainsi qu'un film, une feuille, une couche ou un support (B), disposés en pleine surface entre les deux films adhésifs de contact réactifs.

13. Procédé de fabrication d'un film adhésif de contact réactif selon l'une des revendications 1 à 11, **caractérisé en ce que** le procédé comprend, à l'exclusion d'une lumière UV ou d'une lumière visible ayant une longueur d'onde excitant le catalyseur photorédox, les étapes suivantes :
i. dissolution et/ou division fine des constituants dans un ou plusieurs solvants et/ou de l'eau,
ii. mélange des constituants dissous ou finement divisés,
iii. application du mélange de constituants dissous ou finement divisés selon l'étape 2 sur un film, une feuille, une couche, un support, un film adhésif, un film adhésif de contact, de préférence un papier antiadhésif ou une bande antiadhésive,
iv. évaporation du solvant et/ou de l'eau,
v. éventuellement, enroulement du film adhésif réactif pour obtenir un rouleau.

14. Utilisation d'un film adhésif de contact réactif selon l'une des revendications précédentes 1 à 11 ou d'un ruban adhésif de contact réactif selon la revendication 12 pour fabriquer des liaisons collées sur des matériaux choisis parmi un plastique, un métal, du verre ou une céramique.

15. Corps composite comprenant au moins deux surfaces à coller, qui sont liées l'une à l'autre par le film adhésif de contact réactif durci selon l'une des revendications précédentes 1 à 11 ou par le ruban adhésif de contact réactif durci selon la revendication 12.
